# EUROPEAN PATENT SPECIFICATION

(11) **EP 3 091 762 B1**
(45) Date of publication and mention of the grant of the patent: **26.09.2018**
(21) Application number: 14881083.1
(22) Date of filing: 29.01.2014
(51) Int. Cl.: H04W 68/00

(54) **DOWNLINK DATA PROCESSING METHOD, DEVICE AND SYSTEM**
VERFAHREN, VORRICHTUNG UND SYSTEM ZUR DOWNLINK-DATENVERARBEITUNG
PROCÉDÉ DE TRAITEMENT DE DONNÉES DE LIAISON DESCENDANTE, DISPOSITIF, ET SYSTÈME

(43) Date of publication of application: 09.11.2016
(73) Proprietor: Huawei Technologies Co., Ltd., Longgang District Shenzhen, Guangdong 518129 (CN)
(72) Inventor: MENG, Xian, Shenzhen Guangdong 518129 (CN); ZHANG, Wei, Shenzhen Guangdong 518129 (CN)
(74) Representative: Gill Jennings & Every LLP
(86) International application number: PCT/CN2014/071820
(87) International publication number: WO 2015/113290

(56) References cited:
- EP-A1- 2 339 785
- WO-A1-2011/162667
- WO-A1-2013/055594
- WO-A2-2011/026663
- CN-A- 102 045 802
- CN-A- 102 883 298
- CN-A- 103 428 771
- CN-A- 103 491 580
- US-A1- 2012 063 464
- US-A1- 2013 316 706

## Description

### TECHNICAL FIELD

Embodiments of the present invention relate to the field of communications technologies, and in particular, to a downlink data processing method, apparatus, and system.

### BACKGROUND

In an existing evolved packet core (EPC) network and Universal Mobile Telecommunications System (UMTS) network,, a process in which downlink data for user equipment (UE) in an idle state arrives at the core network and the core network side initiates paging and service requests is as follows:

When downlink data for the UE in an idle state arrives at a serving gateway (SGW), the SGW temporarily stores the data packet, and finds a mobility management entity MME) or a serving GPRS support node (SGSN) serving the UE. The SGW sends a downlink data notification to the MME and the SGSN that are in control plane connection with the UE.

The MME or the SGSN returns a downlink data notification acknowledgment (Downlink Data Notification Ack) to the SGW. If the SGW continues to receive data of the UE, the SGW may continue to temporarily store the data, but does not need to send a new Downlink Data Notification to the MME and SGSN that are in control plane connection with the UE.

If the UE is registered with the MME or the SGSN, the MME or the SGSN may send a paging (Paging) message to each base station (eNodeB) with which the UE is registered and that belongs to a tracking area (tracking area).

The eNodeB receives the Paging message sent by the MME or the SGSN, and sends the Paging message to the UE.

When the UE is in an idle state, if the UE receives the paging message, the UE may initiate a service request process. The process is used to switch the UE in the idle state to a connection state, and re-establish a bearer reserved for the UE in the core network. After the bearer is established, the downlink data may be delivered to the UE.

However, the downlink data processing process for the UE in an idle state is based on the UMTS and EPC network, and does not support a new cloud pipe network architecture based on a software defined network (SDN) and network functions virtualisation (NFV).

US 2013/0316706 relates to predictive paging based on mobility history and movement patterns. EP 2 339 785 relates to a processing method, device and system of service request.

### SUMMARY

The present invention provides a downlink data processing method, apparatus, and system, which can support a Cloud Pipe network architecture based on an SDN and NFV.

According to a first aspect, a downlink data processing method is provided, including:
sending, by a network controller according to an identifier of user equipment included in a downlink data policy response message sent by an entry node, a paging request message to the user equipment, so that the user equipment sends a service request message to the network controller;
determining, according to the service request message, a radio node currently connected to the user equipment, and determining a forwarding path between the entry node and the radio node, where the determined forwarding path includes one or at least one function node; and
sending the determined forwarding path to the entry node, so that the entry node sends a currently-received downlink data packet to the radio node by using the determined forwarding path, and the radio node sends the downlink data packet to the user equipment;
wherein, before the determining a forwarding path between the entry node and the radio node, comprising:
   obtaining, by the network controller, according to the identifier of the user equipment, an identifier of a radio node that was connected to the user equipment and a historical downlink forwarding path by using which a downlink data packet is forwarded to the user equipment;
   predicting, according to the identifier of the radio node that was connected to the user equipment and the historical downlink forwarding path, a radio node currently connected to the user equipment, and predicting a forwarding path between the entry node and the predicted radio node, wherein the predicted forwarding path comprises one or at least one function node that the downlink data packet needs to pass through between the entry node and the predicted radio node; and
   setting at least one function node on the predicted forwarding path as a data cache node, wherein the data cache node comprises at least the last function node on the predicted forwarding path;
   wherein, after the predicting a forwarding path between the entry node and the predicted radio node, the method further comprises:
      sending, by the network controller, the predicted forwarding path and a forwarding policy of the entry node to the entry node, so that the entry node saves the downlink data packet and sends the downlink data packet to the first function node on a second predicted forwarding path according to the corresponding forwarding policy.

According to a second aspect, a downlink data processing apparatus is provided, located on a side of a network controller, including:
a sending module, configured to send, according to an identifier of user equipment included in a downlink data policy response message sent by an entry node, a paging request message to the user equipment;
a receiving module, configured to receive a service request message that is returned by the user equipment according to the paging request message; and
a determining module, configured to: determine, according to the service request message received by the receiving module, a radio node currently connected to the user equipment, and determine a forwarding path between the entry node and the radio node, where the determined forwarding path includes one or at least one function node, where
the sending module is further configured to send the determined forwarding path to the entry node, so that the entry node sends a currently-received downlink data packet to the radio node by using the determined forwarding path, and the radio node sends the downlink data packet to the user equipment;
wherein, the apparatus further comprises:
   an obtaining module, configured to obtain, according to the identifier of the user equipment, an identifier of a radio node that was connected to the user equipment and a historical downlink forwarding path by using which a downlink data packet is forwarded to the user equipment;
   a prediction module, configured to: predict, according to the identifier of the radio node that was connected to the user equipment and the historical downlink forwarding path that are obtained by the obtaining module, a radio node currently connected to the user equipment, and predict a forwarding path between the entry node and the predicted radio node, wherein the predicted forwarding path comprises one or at least one function node that the downlink data packet needs to pass through between the entry node and the predicted radio node; and
   a setting module, configured to set at least one function node on the predicted forwarding path predicted by the prediction module as a data cache node, wherein the data cache node comprises at least the last function node on the predicted forwarding path;
   wherein the sending module is further configured to send the predicted forwarding path and a forwarding policy of the entry node to the entry node, so that the entry node saves the downlink data packet and sends the downlink data packet to the first function node on a second predicted forwarding path according to the corresponding forwarding policy.

According to a third aspect, a downlink data processing system is provided, including the network controller, the entry node, at least one function node, at least one radio node, and user equipment.

In the embodiments of the present invention, a network controller sends, according to an identifier of user equipment included in a downlink data policy response message sent by an entry node, a paging request message to the user equipment, so that the user equipment sends a service request message to the network controller; determines, according to the service request message, a radio node currently connected to the user equipment and a first forwarding path between the entry node and the radio node, and sends the first forwarding path to the entry node, so that the entry node sends a downlink data packet to the radio node by using the first forwarding path, and the radio node sends the downlink data packet to the user equipment. Therefore, the downlink data processing method provided in the embodiments of the present invention can support a Cloud Pipe network architecture based on an SDN and NFV.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a diagram of a Cloud Pipe network architecture applied in the embodiments of the present invention;
FIG. 2 is a schematic flowchart of a downlink data processing method according to an embodiment of the present invention;
FIG. 3 is a schematic flowchart of a downlink data processing method according to another embodiment of the present invention;
FIG. 4 is a signaling diagram of a downlink data processing method according to another embodiment of the present invention;
FIG. 5 is a signaling diagram of a downlink data processing method according to another embodiment of the present invention;
FIG. 6 is a signaling diagram of transmitting downlink data according to another embodiment of the present invention;
FIG. 7 is a schematic structural diagram of a downlink data processing apparatus according to an embodiment of the present invention;
FIG. 8 is a schematic structural diagram of a downlink data processing apparatus according to another embodiment of the present invention;
FIG. 9 is a schematic structural diagram of a downlink data processing system according to another embodiment of the present invention;
FIG. 10 is a schematic structural diagram of a downlink data processing apparatus being a network controller according to an embodiment of the present invention; and
FIG. 11 is a schematic structural diagram of an entry node according to another embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

In the prior art, a downlink data processing process for UE in an idle state is based on a UMTS and EPC network. An intermediate process from when a core network receives the first downlink packet sent to the UE to when the first downlink packet is sent to the UE includes: paging, random access, service request, establishment of S1, and establishment of a radio bearer. Therefore, the first downlink packet has a relative large delay, and an existing downlink data processing method based on the UMTS and EPC network does not support a Cloud Pipe network architecture based on an SDN and NFV.

The embodiments of the present invention provide a downlink data processing method, which can support a Cloud Pipe network architecture based on an SDN and NFV and can reduce a delay of the first downlink packet.

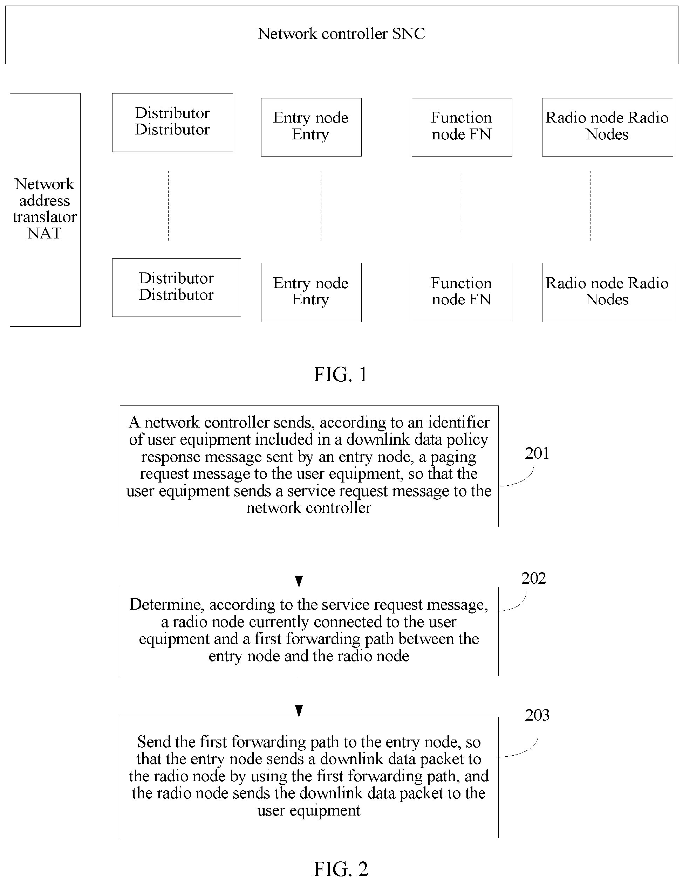

Before the downlink data processing method in the embodiments of the present invention is described in detail, a system architecture (a Cloud Pipe network architecture) applied in the embodiments of the present invention is described. FIG. 1 is a diagram of the Cloud Pipe network applied in the embodiments of the present invention. As shown in FIG. 1, the network architecture includes a network controller (SNC), a network address translation (NAT), a distributor, a function node network formed by an entry node (Entry) and a series of function nodes (Function Nodes, FN), and a radio node.

The Cloud Pipe network architecture may separate functions from a packet data network gateway (PGW) to a base station in an existing network, from an original physical device, and independently deploy the functions in the Function Nodes Network according to function granularities. For example, the functions specifically include decomposition of a physical layer processing function, decomposition of a layer 2 function, decomposition of a layer 3 function, video optimization, and cross-layer optimization. In the Cloud Pipe network architecture, an expensive professional device may be replaced by general hardware and advanced software; a software control plane may be transferred to a more optimal position (that is, the software control plane is separated from dedicated device hardware, is placed in a data center, and may exist in a form of a server or virtual machine); and control of a data plane is extracted from a dedicated device and is standardized, so that innovation of a network and an application does not need hardware upgrade of a network device.

The function of the SNC includes: integrated processing on a signaling plane, processing user-related signaling (for example, user access authentication, movement, and bearer management), exchanging signaling between network elements (for example, updating network status information and maintaining a network topology); integrated control on a user plane, determining a data plane processing rule of user data according to signaling plane information obtained during integrated processing of the signaling plane, where the data plane processing rule includes a processing path and a processing policy/parameter, and transmitting the processing rule to a data plane function node.

The NAT essentially is a universal interface between an access network and an external data network, and the only uplink and downlink paths of date are not directly related to whether there is an NAT operation.

The Distributor is responsible for distributing the received downlink data to multiple entry node function entities. A policy of a distribution entity may be set by default, or may be delivered by the SNC.

To reduce a work amount of data rule matching, the core function of the Entry is performing data rule matching and making a mark in a manner of attaching a tag. A processing function node on a subsequent data path may directly obtain a processing policy by means of indexing according to a tag attached by the entry node, and determine a next-hop route. A manner of attaching a tag may be shown in Table 1.

**Table 1**

| | |
|---|---|
| Label | Packet |

There may be a source routing manner and a per-hop routing manner according to different routing manners of a data packet on a data path. For the source routing manner, the entry node needs to add a source routing identifier to a header of a data packet after identifying a processing rule of the data packet, and mark each-hop processing function on a data path in the source routing identifier. As shown in Table 2:

**Table 2**

| | | | |
|---|---|---|---|
| Hop1 | Hop2 | Hop3 | Packet |

Hop1 is a backward forwarding address after a first-hop processing function is completed, Hop2 is a backward forwarding address after a second-hop processing function is completed, Hop3 is a backward forwarding address after a third-hop processing function is completed, and so on.

Functions provided by the Function Node in an operator network not only include data forwarding of a router/switch, but also include many data processing functions. Meanwhile, the function node is limited by a processing capability (computing and storage), a bandwidth, and the like. For processing of a data stream, the function node also has different processing manners, for example, serial processing and bypass processing. The function node may process the data stream according to a same processing policy or different processing policies. The different processing polices need to be pre-allocated by the SNC or delivered one by one by the SNC. For the pre-allocation manner, a processing policy indication needs to be carried in a header of the data packet, and the function node indexes a data processing policy according to the processing policy indication. If the data stream has a particular processing parameter, the SNC delivers the processing parameter to the function node in a process of establishing the data stream. The processing policy mentioned herein includes a data stream processing method, for example, a compression manner and a compression algorithm during video compression; further includes a data processing priority. The processing parameter includes a specific parameter when a particular processing manner is used. The function nodes may be directly connected, or may be connected by using an IP network. Data forwarding in the IP network may be implemented in an SDN manner, or a conventional autonomous manner. The function node may process the data stream in two manners: serial processing and bypass processing. Serial processing is a general conventional data processing manner, for example, video compression and cross-layer optimization. Data is processed by the compression or optimization module, and then is sequentially delivered to a next processing node. During bypass processing, data needs to be copied, and an indication needs to be added to the rule or the source routing path, for example, COMP, DPI for feedback, and network coding.

The Radio Node may be a remote radio node, or may be an entire base station.

In the Cloud Pipe network architecture, an Orchestrator performs resource allocation during physical resource invoking. When the SNC needs to add a new function node or release a function node, the SNC allocates or releases resources by interacting with the Orchestrator, to achieve an objective of dynamically using a physical resource.

It should be noted that, in the following embodiment, a first forwarding path refers to: the network controller determines, according to a service request message, a radio node currently connected to the user equipment, and determines a forwarding path between the entry node and the radio node, where the determined forwarding path includes one or at least one function node.

A second forwarding path refers to: the network controller predicts a forwarding path between the entry node and a radio node according to an identifier of a radio node that was connected to the user equipment and a historical downlink forwarding path, where the predicted forwarding path includes one or at least one function node that a downlink data packet needs to pass through between the entry node and the predicted radio node.

Based on the Cloud Pipe network architecture shown in FIG. 1, FIG. 2 is a schematic flowchart of a downlink data processing method according to an embodiment of the present invention. As shown in FIG. 2, the method includes:
201: A network controller sends, according to an identifier of user equipment included in a downlink data policy response message sent by an entry node, a paging request message to the user equipment, so that the user equipment sends a service request message to the network controller.
   Optionally, before step 201, the method includes:
   sending, by the network controller, a downlink data policy message to the entry node, where the downlink data policy message is used to instruct the entry node to temporarily store, when the entry node receives a downlink data packet sent by a network side to the user equipment, the downlink data packet, and send the downlink data policy response message to the network controller, where the downlink data policy response message carries the identifier of the user equipment, and the downlink data packet is the first downlink data packet (briefly referred to as the first packet) that the network side intends to send to the user equipment.
   In this embodiment of the present invention, before sending the paging request message to the user equipment, the network controller may determine whether the user equipment is in an idle state, and if the user equipment is in an idle state and no paging request is initiated to the user equipment, send the paging request message to the user equipment.
202: Determine, according to the service request message, a radio node currently connected to the user equipment and a first forwarding path between the entry node and the radio node.
   The first forwarding path includes one or at least one function node, that is, a function node that the downlink data packet needs to pass through between the entry node and the radio node.
203: Send the first forwarding path to the entry node, so that the entry node sends a downlink data packet to the radio node by using the first forwarding path, and the radio node sends the downlink data packet to the user equipment.

In this embodiment of the present invention, a network controller sends, according to an identifier of user equipment included in a downlink data policy response message sent by an entry node, a paging request message to the user equipment, so that the user equipment sends a service request message to the network controller; determines, according to the service request message, a radio node connected to the user equipment and a first forwarding path between the entry node and the radio node, and sends the first forwarding path to the entry node, so that the entry node sends a downlink data packet to the radio node by using the first forwarding path, and the radio node sends the downlink data packet to the user equipment. Therefore, the downlink data processing method in this embodiment can support a Cloud Pipe network architecture based on an SDN and NFV.

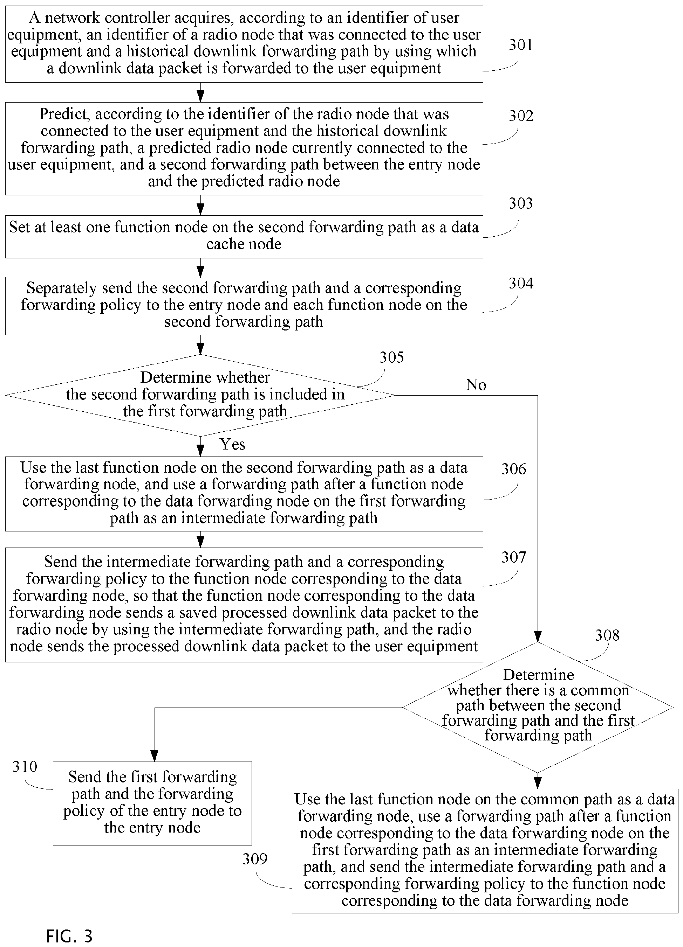

Based on the Cloud Pipe network architecture shown in FIG. 1 and the downlink data processing method provided in the embodiment shown in FIG. 2, the embodiments of the present invention can also reduce a delay of the first downlink packet. FIG. 3 is a schematic flowchart of a downlink data processing method according to another embodiment of the present invention. As shown in FIG. 3, after the network controller receives the identifier of the user equipment included in the downlink data policy response message sent by the entry node, the method includes:
301: The network controller obtains, according to the identifier of the user equipment, an identifier of a radio node that was connected to the user equipment and a historical downlink forwarding path by using which a downlink data packet is forwarded to the user equipment.
302: Predict, according to the identifier of the radio node that was connected to the user equipment and the historical downlink forwarding path, a radio node currently connected to the user equipment and a second forwarding path between the entry node and the predicted radio node.
   The second forwarding path includes one or at least one function node that the downlink data packet needs to pass through between the entry node and the predicted radio node.
   In this embodiment, each time a downlink data packet is sent to the user equipment, the SNC needs to record each radio node connected to the user equipment, and each forwarding path (also referred to as a historical downlink forwarding path) by using which the downlink data packet is forwarded from the entry node to the radio node. In this way, the network controller may obtain, according to the identifier of the user equipment, the identifier of the radio node that was connected to the user equipment and the historical downlink forwarding path, and further predict the predicted radio node currently connected to the user equipment and the second forwarding path between the entry node and the predicted radio node.
   For example, assuming that the entry node receives the first downlink data packet (briefly referred to as the first packet) whose destination is the user equipment, in this embodiment, the entry node may send the first packet to the network controller, so that the network controller predicts, according to a type of the first packet, the second forwarding path and the predicted radio node that are used to send the downlink data to the user equipment.
303: Set at least one function node on the second forwarding path as a data cache node.
   It should be noted that, in this embodiment, if there is one data cache node, the data cache node is the last function node on the second forwarding path; if there is at least one data cache node, one data cache node is the last function node on the second forwarding path, and the other data cache node is any one or at least one function node from the first function node to a previous function node of the last function node on the second forwarding path.
304: Separately send the second forwarding path and a corresponding forwarding policy to the entry node and each function node on the second forwarding path.
   Correspondingly, the entry node saves the downlink data packet and sends the downlink data packet to the first function node on the second forwarding path according to the corresponding forwarding policy.
   Correspondingly, when any function node from the first function node to the previous function node of the last function node on the second forwarding path determines that the function node is a data cache node, the function node processes the downlink data, saves the processed downlink data, and sends the processed downlink data to a next function node, or when any function node from the first function node to the previous function node of the last function node on the second forwarding path determines that the function node is not a data cache node, the function node processes the downlink data and sends the processed downlink data to a next function node.
   The last function node on the second forwarding path processes the downlink data and saves the processed downlink data.
305: Determine whether the second forwarding path is included in the first forwarding path; if yes, perform step 306; otherwise, perform step 308.
   For content related to the first forwarding path, reference may be made to descriptions provided in the embodiment shown in FIG. 1, and details are not described herein again.
   Specifically, after determining the first forwarding path according to the service request message returned by the user equipment, the network controller compares the first forwarding path with the predicted second forwarding path; if all function nodes on the second forwarding path are included in the first forwarding path and the first function node on the second forwarding path and the first function node on the first forwarding path are a same function node, determines that the second forwarding path is included in the first forwarding path; otherwise, determines that the second forwarding path is not included in the first forwarding path.
306: Use the last function node on the second forwarding path as a data forwarding node, and use a forwarding path after a function node corresponding to the data forwarding node on the first forwarding path as an intermediate forwarding path.
   The intermediate forwarding path includes a function node from a next function node of the function node corresponding to the data forwarding node to the last function node on the first forwarding path.
307: Send the intermediate forwarding path and a corresponding forwarding policy to the function node corresponding to the data forwarding node, so that the function node corresponding to the data forwarding node sends the saved processed downlink data packet to the radio node by using the intermediate forwarding path, and the radio node sends the processed downlink data packet to the user equipment.
308: Determine whether there is a common path between the second forwarding path and the first forwarding path; if yes, perform step 309; otherwise, perform step 310.
   In this embodiment, if there is a common path, the first function node on the common path is a same function node on the first forwarding path and the second forwarding path, and the last function node on the common path is a same function node on the first forwarding path and the second forwarding path and the function node is a data cache node.
309: Use the last function node on the common path as a data forwarding node, use a forwarding path after a function node corresponding to the data forwarding node on the first forwarding path as an intermediate forwarding path, and send the intermediate forwarding path and a corresponding forwarding policy to the function node corresponding to the data forwarding node.
   The intermediate forwarding path includes a function node from a next function node of the function node corresponding to the data forwarding node to the last function node on the first forwarding path.
   Correspondingly, the function node corresponding to the data forwarding node sends the saved processed downlink data packet to the radio node by using the intermediate forwarding path, so that the radio node sends the processed downlink data packet to the user equipment.
   Optionally, in this embodiment, the network controller may use a forwarding path after a function node corresponding to the data forwarding node on the second forwarding path as an outdate data path, where the outdate data path includes a function node from a next function node of the function node corresponding to the data forwarding node to the last function node on the second forwarding path; and send a forwarding cancel policy to each function node on the outdate data path, so that each function node deletes the processed downlink data packet.
310: Send the first forwarding path and the forwarding policy of the entry node to the entry node.

Correspondingly, the entry node sends the saved processed downlink data packet to the radio node by using the first forwarding path according to the corresponding forwarding policy, so that the radio node sends the processed downlink data packet to the user equipment.

Optionally, in this embodiment, the network controller may send the forwarding cancel policy to the last function node on the second forwarding path, so that the last function node on the second forwarding path deletes the processed downlink data packet.

In this embodiment of the present invention, after receiving an identifier of user equipment included in a downlink data policy response message sent by an entry node, a network controller may predict a radio node connected to the user equipment and a second forwarding path between the entry node and the radio node; then, separately send the predicted second forwarding path and a corresponding forwarding policy to the entry node and a function node on the second forwarding path, so that the entry node saves a downlink data packet and sends the downlink data packet to the first function node on the second forwarding path, each function node on the second forwarding path processes the downlink data packet and forwards the processed downlink data packet to a next function node, and the last function node on the second forwarding path saves the processed downlink data packet. After the network controller determines a radio node currently connected to the user equipment and a first forwarding path, the network controller compares the first forwarding path with the second forwarding path. Because the network controller already predicts the second forwarding path before determining the first forwarding path, and each function node on the second forwarding path pre-processes the downlink data packet and the last function node on the second forwarding path saves the downlink data packet, after the first forwarding path is determined and when the second forwarding path is included in the first forwarding path, the last function node on the second forwarding path directly sends the saved pre-processed downlink data to the determined radio node and after the first forwarding path is determined, the downlink data packet does not need to be forwarded to the radio node by using each function node on the first forwarding path from the entry node before the downlink data packet is sent to the user equipment. Therefore, a delay of the downlink data packet can be reduced and the downlink data processing efficiency can be improved.

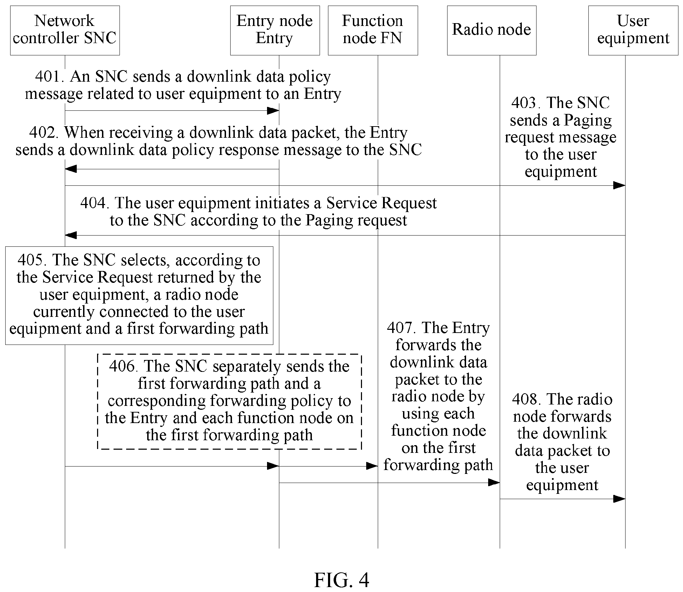

The following describes in detail a specific implementation process of the embodiments of the present invention. FIG. 4 is a signaling diagram of a downlink data processing method according to another embodiment of the present invention. As shown in FIG. 4:
401: An SNC sends a downlink data policy message related to user equipment to an Entry.
   The downlink data policy message includes a processing policy for a downlink data packet of the user equipment, where the processing policy indicates: for example, when the Entry receives the first downlink data packet (the first packet) sent by a network side to the user equipment, the entry sends a paging (paging) request message to the SNC and temporarily stores the first packet. For another example, when the Entry receives the first downlink data packet (the first packet) sent by the network side to the user equipment, the entry temporarily stores the first packet, encapsulates the first packet, and forwards the first packet to the SNC; or directly forwards the first packet to the SNC.
402: When receiving a downlink data packet, the Entry sends a downlink data policy response message to the SNC.
   For example, when the downlink data packet related to the user equipment arrives, the Entry searches for a processing policy of the downlink data packet. If the downlink data packet is the first packet, the entry sends a Paging request message (carrying an identifier of the user equipment) to the SNC, and temporarily stores the received first packet; if the downlink data packet is not the first packet, the entry only temporarily stores the downlink data packet; or, the Entry directly sends the first packet to the SNC for processing and temporarily stores the first packet.
403: The SNC sends a Paging request message to the user equipment.
   For example, when the SNC receives the Paging request message sent by the Entry and carrying the identifier of the user equipment or receives the first packet related to the user equipment, if the user equipment is in an idle (ECM-IDLE) state, and Paging is not initiated to the user equipment yet, the SNC initiates the Paging request to the user equipment.
404: The user equipment initiates a Service Request to the SNC according to the Paging request.
   After receiving the paging request message, the device initiates the service request (Service Request) message to the SNC according to the paging request message.
405: The SNC selects, according to the Service Request returned by the user equipment, a radio node currently connected to the user equipment and a first forwarding path.
   After receiving the service request (Service Request) message sent by the user equipment, the SNC determines the radio node currently connected to the user equipment and the first forwarding path, and establishes a wireless bearer between the radio node and the user equipment.
   The first forwarding path includes a function node that needs to be passed through between the entry node and the radio node. Then, the SNC separately sends the first forwarding path and the corresponding forwarding policy to the entry node and each function node on the first forwarding path.
406: The SNC separately sends the first forwarding path and a corresponding forwarding policy to the Entry and each function node on the first forwarding path.
407: The Entry forwards the downlink data packet to the radio node by using each function node on the first forwarding path.
408: The radio node forwards the downlink data packet to the user equipment.

In this embodiment of the present invention, a network controller sends, according to an identifier of user equipment included in a downlink data policy response message sent by an entry node, a paging request message to the user equipment, so that the user equipment sends a service request message to the network controller; determines, according to the service request message, a radio node connected to the user equipment and a first forwarding path between the entry node and the radio node, and sends the first forwarding path to the entry node, so that the entry node sends a downlink data packet to the radio node by using the first forwarding path, and the radio node sends the downlink data packet to the user equipment. Therefore, the downlink data processing method in this embodiment can support a Cloud Pipe network architecture based on an SDN and NFV.

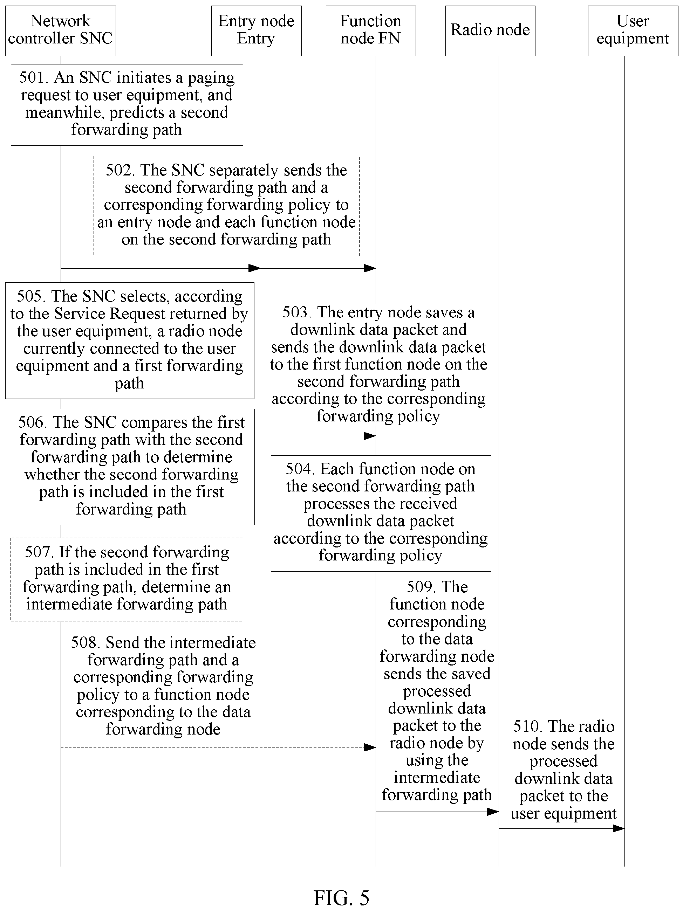

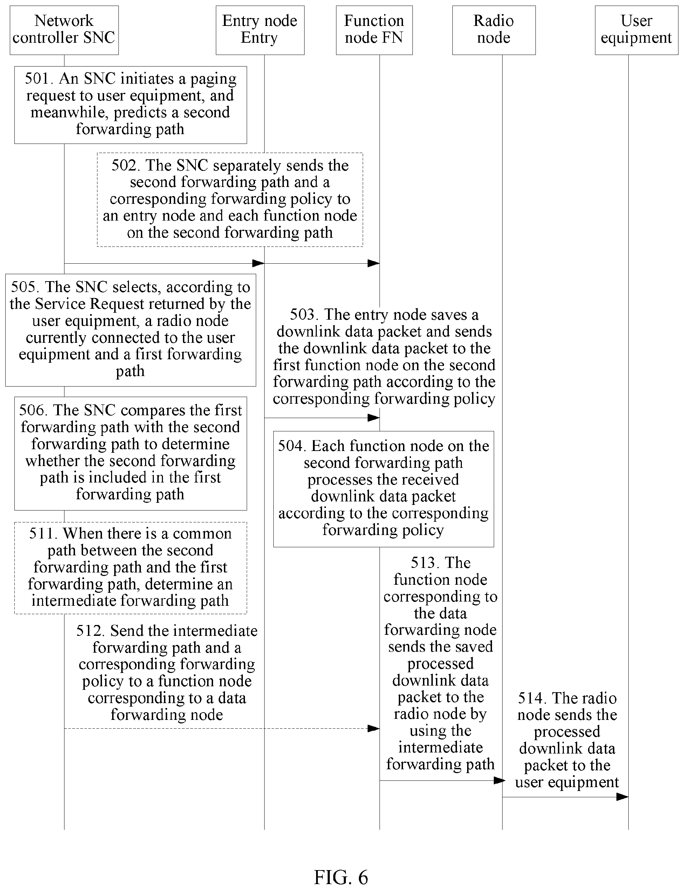

Based on step 401 to step 403 in the embodiment shown in FIG. 4, FIG. 5 is a signaling diagram of a downlink data processing method according to another embodiment of the present invention. As shown in FIG. 5, the method includes:
501: An SNC initiates a paging request to user equipment, and meanwhile, predicts a second forwarding path.
   For example, the SNC may obtain an identifier of a radio node that was connected to the user equipment and a historical downlink forwarding path, and further predict a radio node currently connected to the user equipment and a second forwarding path between an entry node and the predicted radio node. For the historical downlink forwarding path related to the user equipment, reference may be made to related descriptions in the embodiment shown in FIG. 3, and details are not described herein again.
   The second forwarding path includes a function node that needs to be passed through between the entry node and the predicted radio node.
502: The SNC separately sends the second forwarding path and a corresponding forwarding policy to an entry node and each function node on the second forwarding path.
   For example, in this embodiment, the SNC may set at least one function node on the second forwarding path as a data cache node. It should be noted that, if there is one data cache node, the data cache node is the last function node on the second forwarding path; if there is at least one data cache node, one data cache node is the last function node on the second forwarding path, the other data cache node is any one or at least one function node from the first function node to a previous function node of the last function node on the second forwarding path.
503: The entry node saves a downlink data packet and sends the downlink data packet to the first function node on the second forwarding path according to the corresponding forwarding policy.
504: Each function node on the second forwarding path processes the received downlink data packet according to the corresponding forwarding policy.
   When any function node from the first function node to the previous function node of the last function node on the second forwarding path determines that the function node is a data cache node, the function node processes the downlink data, saves the processed downlink data, and sends the processed downlink data to a next function node; or when any function node from the first function node to the previous function node of the last function node on the second forwarding path determines that the function node is not a data cache node, the function node processes the downlink data and sends the processed downlink data to a next function node.
   The last function node on the second forwarding path processes the downlink data and saves the processed downlink data.
505: The SNC selects, according to the Service Request returned by the user equipment, a radio node currently connected to the user equipment and a first forwarding path.
   After receiving the service request (Service Request) message sent by the user equipment, the SNC determines the radio node currently connected to the user equipment and the first forwarding path, and establishes a wireless bearer between the radio node and the user equipment.
   The first forwarding path includes a function node that needs to be passed through between the entry node and the radio node.
506: The SNC compares the first forwarding path with the second forwarding path to determine whether the second forwarding path is included in the first forwarding path.
   If all function nodes on the second forwarding path are included in the first forwarding path and the first function node on the second forwarding path and the first function node on the first forwarding path are a same function node, it is determined that the second forwarding path is included in the first forwarding path; otherwise, it is determined that the second forwarding path is not included in the first forwarding path. For example, the function nodes on the first forwarding path are separately A, B, C, D, and E, the function nodes on the second forwarding path are separately A, B, and C, and the second forwarding path is included in the first forwarding path.
   Optionally, after step 506, the method includes:
507: If the second forwarding path is included in the first forwarding path, determine an intermediate forwarding path.
   Specifically, the last function node on the second forwarding path is used as a data forwarding node, and a forwarding path after a function node corresponding to the data forwarding node on the first forwarding path is used as an intermediate forwarding path, where the intermediate forwarding path includes a function node from a next function node of the function node corresponding to the data forwarding node to the last function node on the first forwarding path. In the foregoing example, the function nodes D and E form the intermediate forwarding path.
508: Send the intermediate forwarding path and a corresponding forwarding policy to a function node corresponding to the data forwarding node.
509: The function node corresponding to the data forwarding node sends the saved processed downlink data packet to the radio node by using the intermediate forwarding path.
   Because each function node on the predicted second forwarding path already pre-processes the downlink data packet and the last function node (the data forwarding path) on the second forwarding path saves the pre-processed downlink data packet. After receiving the intermediate forwarding path and the corresponding forwarding policy that are sent by the SNC, the last function node on the second forwarding path may directly send the pre-processed downlink data packet to a next function node (that is, the first function node on the intermediate path) and send the downlink data packet to the radio node by using function nodes on the intermediate forwarding path.
510: The radio node sends the processed downlink data packet to the user equipment.
   In this embodiment of the present invention, after receiving an identifier of user equipment included in a downlink data policy response message sent by an entry node, a network controller may predict a radio node connected to the user equipment and a second forwarding path between the entry node and the radio node; then, separately send the predicted second forwarding path and a corresponding forwarding policy to the entry node and a function node on the second forwarding path, so that the entry node saves a downlink data packet and sends the downlink data packet to the first function node on the second forwarding path, each function node on the second forwarding path processes the downlink data packet and forwards the processed downlink data packet to a next function node, and the last function node on the second forwarding path saves the processed downlink data packet. After the network controller determines a radio node currently connected to the user equipment and a first forwarding path, the network controller compares the first forwarding path with the second forwarding path. Because the network controller already predicts the second forwarding path before determining the first forwarding path, and each function node on the second forwarding path pre-processes the downlink data packet and the last function node on the second forwarding path saves the downlink data packet, after the first forwarding path is determined and when the second forwarding path is included in the first forwarding path, the last function node on the second forwarding path directly sends the saved pre-processed downlink data to the determined radio node and after the first forwarding path is determined, the downlink data packet does not need to be forwarded to the radio node by using each function node on the first forwarding path from the entry node before the downlink data packet is sent to the user equipment. Therefore, a delay of the downlink data packet can be reduced and the downlink data processing efficiency can be improved.
   Based on step 501 to step 506 in the embodiment shown in FIG. 5, FIG. 6 is a signaling diagram of a downlink data processing method according to another embodiment of the present invention. As shown in FIG. 6, optionally, after step 506, the method includes:
511: When there is a common path between the second forwarding path and the first forwarding path, determine an intermediate forwarding path.
   When the second forwarding path is not included in the first forwarding path and there is a common path between the second forwarding path and the first forwarding path, where the first function node on the common path is a same function node on the first forwarding path and the second forwarding path, and the last function node on the common path is a same function node on the first forwarding path and the second forwarding path and the function node is a data cache node, the last function node on the common path is used as a data forwarding node, and a forwarding path after a function node corresponding to the data forwarding node on the first forwarding path is used as an intermediate forwarding path, where the intermediate forwarding path includes a function node from a next function node of the function node corresponding to the data forwarding node to the last function node on the first forwarding path.
   For example, the function nodes included in the first forwarding path are A, B, C, and D and the function nodes included in the second forwarding path are A, B, c, P, Q, where the capital letters represent function nodes used as data cache nodes and the small letter represents a function node that is not used as a data cache node. Therefore, function nodes included in the common path are A and B.
512: Send the intermediate forwarding path and a corresponding forwarding policy to a function node corresponding to a data forwarding node.
513: The function node corresponding to the data forwarding node sends the saved processed downlink data packet to the radio node by using the intermediate forwarding path.
   Because the last function node on the common path is used as a data cache node and saves the pre-processed downlink data packet, after receiving the intermediate forwarding path and the corresponding forwarding policy that are sent by the SNC, the last function node on the common path may directly send the pre-processed downlink data packet to a next function node (that is, the first function node on the intermediate forwarding path), and send the downlink data packet to the radio node by using the function nodes on the intermediate forwarding path.
514: The radio node sends the processed downlink data packet to the user equipment.

In this embodiment, when there is a common path between the second forwarding path and the first forwarding path, because the last function node on the common path is used as a data cache node and already saves the pre-processed downlink data packet, after receiving the intermediate forwarding path and the corresponding forwarding policy that are sent by the SNC, the last function node on the common path may directly send the pre-processed downlink data packet to a next function node (that is, the first function node on the intermediate forwarding path), and send the downlink data packet to the radio node by using the function nodes on the intermediate forwarding path, which can reduce a sending delay of the downlink data packet.

Optionally, after step 506, the method includes:
when the first forwarding path is not included in the second forwarding path and there is no common path between the first forwarding path and the second forwarding path, sending the first forwarding path and a forwarding policy of the entry node to the entry node and sending the second forwarding path and a corresponding forwarding policy to the function nodes on the first forwarding path. Correspondingly, the entry node sends the saved downlink data packet to the radio node by using the first forwarding path according to the corresponding forwarding policy, so that the radio node sends the processed downlink data packet to the user equipment. Optionally, in this embodiment, the network controller may send a forwarding cancel policy to the last function node on the second forwarding path, so that the last function node on the second forwarding path deletes the processed downlink data packet, thereby releasing cache space of a function node used as a data cache node on the second forwarding path.

Optionally, after step 506, the method includes:
when the first forwarding path is not included in the second forwarding path and there is a common path between the first forwarding path and the second forwarding path, using, by the network controller, a forwarding path after a function node corresponding to the data forwarding node on the second forwarding path as an outdate data path, where the outdate data path includes a function node from a next function node of the function node corresponding to the data forwarding node to the last function node on the second forwarding path; and sending a forwarding cancel policy to each function node on the outdate data path, so that each function node deletes the processed downlink data packet, thereby releasing cache space of the function node used as the data cache node on the second forwarding path.

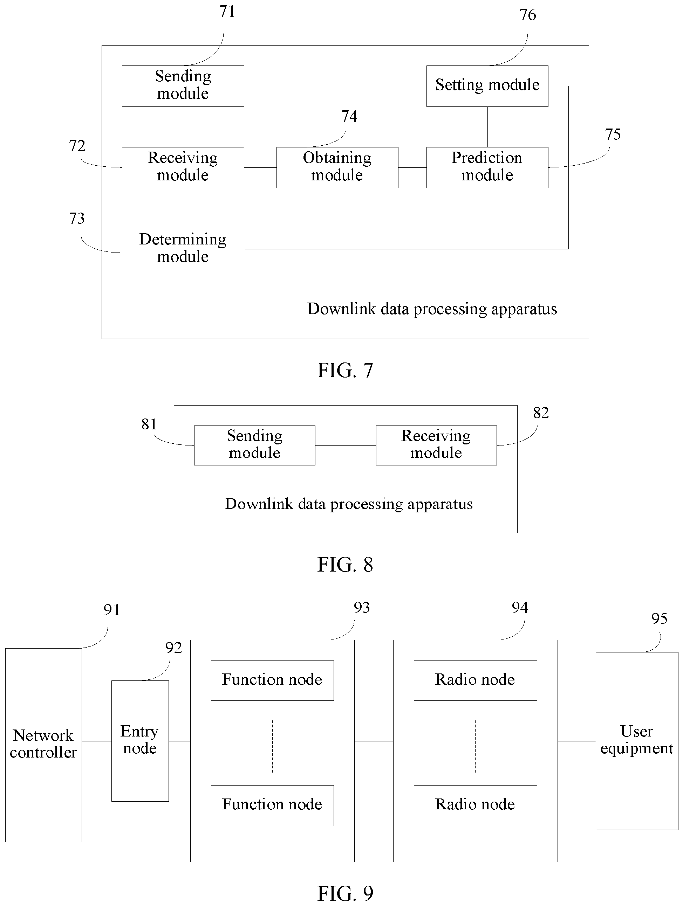

FIG. 7 is a schematic structural diagram of a downlink data processing apparatus according to an embodiment of the present invention, for example, located on a side of a network controller. As shown in FIG. 7, the downlink data processing apparatus includes:
a sending module 71, configured to send, according to an identifier of user equipment that is included in a downlink data policy response message sent by an entry node and that is received by a receiving module 72, a paging request message to the user equipment;
the receiving module 72, configured to receive a service request message that is returned by the user equipment according to the paging request message; and
a determining module 73, configured to: determine, according to the service request message received by the receiving module, a radio node currently connected to the user equipment, and determine a first forwarding path between the entry node and the radio node, where the first forwarding path includes one or at least one function node, where
the sending module 71 is further configured to send the first forwarding path to the entry node, so that the entry node sends a currently-received downlink data packet to the radio node by using the first forwarding path, and the radio node sends the downlink data packet to the user equipment.

Optionally, the sending module 71 is further configured to send a downlink data policy message to the entry node, where the downlink data policy message is used to instruct the entry node to temporarily store the downlink data packet when the entry node receives the downlink data packet sent to the user equipment, and send the downlink data policy response message to the network controller, where the downlink data policy response message carries the identifier of the user equipment.

Optionally, the sending module 71 is specifically configured to: when it is determined that the user equipment is in an idle state and no paging request is initiated to the user equipment, send the paging request message to the user equipment.

Optionally, the apparatus further includes:
an obtaining module 74, configured to obtain, according to the identifier of the user equipment received by the receiving unit 72, an identifier of a radio node that was connected to the user equipment and a historical downlink forwarding path by using which a downlink data packet is forwarded to the user equipment;
a prediction module 75, configured to: predict, according to the identifier of the radio node that was connected to the user equipment and the historical downlink forwarding path that are obtained by the obtaining module 74, a radio node currently connected to the user equipment, and predict a second forwarding path between the entry node and the predicted radio node, where the second forwarding path includes one or at least one function node that the downlink data packet needs to pass through between the entry node and the predicted radio node; and
a setting module 76, configured to set at least one function node on the second forwarding path predicted by the prediction module 75 as a data cache node, where the data cache node includes at least the last function node on the second forwarding path.

Optionally, the sending module 71 is further configured to send the second forwarding path and a forwarding policy of the entry node to the entry node, so that the entry node saves the downlink data packet and sends the downlink data packet to the first function node on the second forwarding path according to the corresponding forwarding policy.

Optionally, the sending module 71 is further configured to send, by the network controller, the second forwarding path and a forwarding policy of each function node on the second forwarding path to the corresponding function node, so that when any function node except the last function node on the second forwarding path determines that the function node is a data cache node, the function node processes the downlink data, saves the processed downlink data, and sends the processed downlink data to a next function node, or when any function node except the last function node on the second forwarding path determines that the function node is not a data cache node, the function node processes the downlink data and sends the processed downlink data to a next function node, and the last function node on the second forwarding path processes the downlink data and saves the processed downlink data.

Optionally, the determining module 73 is further configured to: compare the first forwarding path with the second forwarding path; if all function nodes on the second forwarding path are included in the first forwarding path and the first function node on the second forwarding path and the first function node on the first forwarding path are a same function node, determine that the second forwarding path is included in the first forwarding path;
the setting module 76 is further configured to: use the last function node on the second forwarding path determined by the determining module 73 as a data forwarding node, and use a forwarding path after a function node corresponding to the data forwarding node on the first forwarding path as an intermediate forwarding path, where the intermediate forwarding path includes a function node from a next function node of the function node corresponding to the data forwarding node to the last function node on the first forwarding path; and
the sending module 71 is further configured to send the intermediate forwarding path and a corresponding forwarding policy to the function node corresponding to the data forwarding node, so that the function node corresponding to the data forwarding node sends the saved processed downlink data packet to the radio node by using the intermediate forwarding path, and the radio node sends the processed downlink data packet to the user equipment.

Optionally, the determining module 73 is further configured to compare the first forwarding path with the second forwarding path to determine that the second forwarding path is not included in the first forwarding path and there is no common path between the second forwarding path and the first forwarding path;
the sending module 71 is further configured to send a forwarding cancel policy to the last function node on the second forwarding path, so that the last function node on the second forwarding path deletes the processed downlink data packet; and
the sending module 71 is further configured to send the first forwarding path and the forwarding policy of the entry node to the entry node, so that the entry node sends the saved downlink data packet to the radio node by using the first forwarding path according to the corresponding forwarding policy, and the radio node sends the processed downlink data packet to the user equipment.

Optionally, the determining module 73 is further configured to compare the first forwarding path with the second forwarding path to determine that the second forwarding path is not included in the first forwarding path and there is a common path between the second forwarding path and the first forwarding path, where the first function node on the common path is a same function node on the first forwarding path and the second forwarding path, and the last function node on the common path is a same function node on the first forwarding path and the second forwarding path and the function node is a data cache node;
the setting module 76 is further configured to: use the last function node on the common forwarding path determined by the determining module 73 as a data forwarding node, and use a forwarding path after a function node corresponding to the data forwarding node on the first forwarding path as an intermediate forwarding path, where the intermediate forwarding path includes a function node from a next function node of the function node corresponding to the data forwarding node to the last function node on the first forwarding path; and
the sending module 71 is further configured to send the intermediate forwarding path set by the setting module 76 and a corresponding forwarding policy to the function node corresponding to the data forwarding node, so that the function node corresponding to the data forwarding node sends the saved processed downlink data packet to the radio node by using the intermediate forwarding path, and the radio node sends the processed downlink data packet to the user equipment.

Optionally, the setting module 76 is further configured to use a forwarding path after a function node corresponding to the data forwarding node on the second forwarding path as an outdate data path, where the outdate data path includes a function node from a next function node of the function node corresponding to the data forwarding node on the second forwarding path to the last function node on the second forwarding path; and
the sending module 71 is further configured to send a forwarding cancel policy to each function node on the outdate data path, so that each function node deletes the processed downlink data packet.

In this embodiment of the present invention, after receiving an identifier of user equipment included in a downlink data policy response message sent by an entry node, a network controller may predict a radio node connected to the user equipment and a second forwarding path between the entry node and the radio node; then, separately send the predicted second forwarding path and a corresponding forwarding policy to the entry node and a function node on the second forwarding path, so that the entry node saves a downlink data packet and sends the downlink data packet to the first function node on the second forwarding path, each function node on the second forwarding path processes the downlink data packet and forwards the processed downlink data packet to a next function node, and the last function node on the second forwarding path saves the processed downlink data packet. After the network controller determines a radio node currently connected to the user equipment and a first forwarding path, the network controller compares the first forwarding path with the second forwarding path. Because the network controller already predicts the second forwarding path before determining the first forwarding path, and each function node on the second forwarding path pre-processes the downlink data packet and the last function node on the second forwarding path saves the downlink data packet, after the first forwarding path is determined and when the second forwarding path is included in the first forwarding path, the last function node on the second forwarding path directly sends the saved pre-processed downlink data to the determined radio node and after the first forwarding path is determined, the downlink data packet does not need to be forwarded to the radio node by using each function node on the first forwarding path from the entry node before the downlink data packet is sent to the user equipment. Therefore, a delay of the downlink data packet can be reduced and the downlink data processing efficiency can be improved.

FIG. 8 is a schematic structural diagram of a downlink data processing apparatus according to another embodiment of the present invention, for example, located on a side of an entry node. As shown in FIG. 8, the downlink data processing apparatus includes:
a sending module 81, configured to send a downlink data policy response message including an identifier of user equipment to a network controller, so that the network controller sends a paging request message to the user equipment, and when receiving a service request message sent by the user equipment to the network controller, determines a radio node currently connected to the user equipment and a first forwarding path between the entry node and the radio node, where the first forwarding path includes one or at least one function node; and
a receiving module 82, configured to receive the first forwarding path sent by the network controller, where
the sending module 81 is further configured to send a downlink data packet to the radio node by using the first forwarding path, so that the radio node sends the downlink data packet to the user equipment.

Optionally, the receiving module 82 is further configured to receive a downlink data policy message sent by the network controller, where the downlink data policy message is used to instruct the entry node to temporarily store the downlink data packet when the entry node receives the downlink data packet sent by the network side to the user equipment, and send the downlink data policy response message to the network controller.

In this embodiment of the present invention, a network controller sends, according to an identifier of user equipment included in a downlink data policy response message sent by an entry node, a paging request message to the user equipment, so that the user equipment sends a service request message to the network controller; determines, according to the service request message, a radio node currently connected to the user equipment and a first forwarding path between the entry node and the radio node, and sends the first forwarding path to the entry node, so that the entry node sends a downlink data packet to the radio node by using the first forwarding path, and the radio node sends the downlink data packet to the user equipment. Therefore, the downlink data processing method provided in this embodiment of the present invention can support a Cloud Pipe network architecture based on an SDN and NFV.

FIG. 9 is a schematic structural diagram of a downlink processing system according to another embodiment of the present invention. As shown in FIG. 9, the downlink data processing system includes a network controller 91, an entry node 92, at least one function node 93, at least one radio node 94, and user equipment 95, where
the network controller 91 is separately connected to the entry node 92 and the function node 93, the function node 93 is connected to the radio node 94, and the radio node 94 is connected to the user equipment 95;
the network controller 91 is configured to send a downlink data policy message to the entry node, where the downlink data policy message is used to instruct the entry node to temporarily store, when the entry node receives a downlink data packet sent by a network side to the user equipment, the downlink data packet, and send a downlink data policy response message to the network controller, where the downlink data policy response message carries an identifier of the user equipment;
the network controller 91 is further configured to: when it is determined, according to the identifier of the user equipment included in the downlink data policy response message sent by the entry node, that the user equipment is in an idle state and no paging request is initiated to the user equipment, send a paging request message to the user equipment, so that the user equipment sends a service request message to the network controller;
the network controller 91 is further configured to determine, according to the service request message, a radio node currently connected to the user equipment and a first forwarding path between the entry node and the radio node, where the first forwarding path includes one or at least one function node; and send the first forwarding path to the entry node; and
the entry node 92 is configured to send the downlink data packet to the radio node by using the first forwarding path, so that the radio node sends the downlink data packet to the user equipment.

Optionally, the network controller 91 is further configured to obtain, according to the identifier of the user equipment, an identifier of a radio node that was connected to the user equipment and a historical downlink forwarding path by using which a downlink data packet is forwarded to the user equipment;
the network controller 91 is further configured to: predict, according to the identifier of the radio node that was connected to the user equipment and the historical downlink forwarding path, a radio node currently connected to the user equipment, and predict a second forwarding path between the entry node and the predicted radio node, where the second forwarding path includes one or at least one function node that the downlink data packet needs to pass through between the entry node and the predicted radio node; and
the network controller 91 is further configured to set at least one function node on the second forwarding path as a data cache node, where if there is one data cache node, the data cache node is the last function node on the second forwarding path; if there is at least one data cache node, one data cache node is the last function node on the second forwarding path, the other data cache node is any one or at least one function node from the first function node to a previous function node of the last function node on the second forwarding path.

Optionally, the network controller 91 is further configured to send the second forwarding path and a forwarding policy of the entry node to the entry node; and
the entry node 92 is further configured to: save the downlink data packet and send the downlink data packet to the first function node on the second forwarding path according to the corresponding forwarding policy.

Optionally, the network controller 91 is further configured to send the second forwarding path and a forwarding policy of each function node on the second forwarding path to the corresponding function node, where
a function node from the first function node to the previous function node of the last function node on the second forwarding path is configured to: when determining that the function node is a data cache node, process the downlink data, save the processed downlink data, and send the processed downlink data to a next function node, or when determining that the function node is not a data cache node, process the downlink data and send the processed downlink data to a next function node; and
the last function node on the second forwarding path is configured to: process the downlink data and save the processed downlink data.

Optionally, the network controller 91 is further configured to: compare the first forwarding path with the second forwarding path, and if all function nodes on the second forwarding path are included in the first forwarding path and the first function node on the second forwarding path and the first function node on the first forwarding path are a same function node, determine that the second forwarding path is included in the downlink predicted path; use the last function node on the second forwarding path as a data forwarding node, and use a forwarding path after a function node corresponding to the data forwarding node on the first forwarding path as an intermediate forwarding path, where the intermediate forwarding path includes a function node from a next function node of the function node corresponding to the data forwarding node to the last function node on the first forwarding path; and send the intermediate forwarding path and a corresponding forwarding policy to the function node corresponding to the data forwarding node, where
the function node 93 corresponding to the data forwarding node is configured to send the saved processed downlink data packet to the radio node by using the intermediate forwarding path, so that the radio node sends the processed downlink data packet to the user equipment.

Optionally, the network controller 91 is further configured to: compare the first forwarding path with the second forwarding path to determine that the second forwarding path is not included in the first forwarding path and there is no common path between the second forwarding path and the first forwarding path; send a forwarding cancel policy to the last function node on the second forwarding path; and send the first forwarding path and the forwarding policy of the entry node to the entry node, where
the last function node 93 on the second forwarding path is configured to delete the processed downlink data packet according to the forwarding cancel policy; and
the entry node 92 is further configured to send the saved downlink data packet to the radio node by using the first forwarding path according to the corresponding forwarding policy, so that the radio node sends the processed downlink data packet to the user equipment.

Optionally, the network controller 91 is further configured to: compare the first forwarding path with the second forwarding path to determine that the second forwarding path is not included in the first forwarding path and there is a common path between the second forwarding path and the first forwarding path, where the first function node on the common path is a same function node on the first forwarding path and the second forwarding path, and the last function node on the common path is a same function node on the first forwarding path and the second forwarding path and the function node is a data cache node; use the last function node on the common path as a data forwarding node; use a forwarding path after a function node corresponding to the data forwarding node on the first forwarding path as an intermediate forwarding path, where the intermediate forwarding path includes a function node from a next function node of the function node corresponding to the data forwarding node to the last function node on the first forwarding path; and send the intermediate forwarding path and the corresponding forwarding policy to the function node corresponding to the data forwarding node, where
the function node 93 corresponding to the data forwarding node is further configured to send the saved processed downlink data packet to the radio node by using the intermediate forwarding path, so that the radio node sends the processed downlink data packet to the user equipment.

Optionally, the network controller 91 is further configured to use a forwarding path after a function node corresponding to the data forwarding node on the second forwarding path as an outdate data path, where the outdate data path includes a function node from a next function node of the function node corresponding to the data forwarding node to the last function node on the second forwarding path; and send a forwarding cancel policy to each function node on the outdate data path, where
each function node 93 on the outdate data path is configured to delete the processed downlink data packet.

It should be noted that, in actual application, after the user equipment 95 is registered with a network, the network may allocate an IP address to the user equipment. In a downlink direction, the IP address is a destination address of an IP packet.

The IP packet includes a quintuple, that is, a source IP address, a destination IP address, a protocol number, a source port, and a destination port. In the downlink direction, when a network side server needs to send data to user equipment, in the IP packet, the network side server needs to fill the source IP address with the IP address of the server and fill the destination IP address with an IP address of the user equipment.

When the entry node (Entry) or the function unit (FN) receives a data packet in the downlink direction, the entry node or the function node first determines how to operate the data packet according to the quintuple of the IP packet, that is, a rule of processing a data stream. For example, it is determined, according to whether the data stream satisfies all IP packet of a particular IP quintuple, whether to forward the data stream to another unit or the entry node for saving or whether to forward the data stream to the SNC. The rule of processing a data stream is sent by the SNC to the entry node (Entry) or the function unit (FN), and after receiving the rule of processing a data stream, the entry node (Entry) or the function unit (FN) performs operation according to the rule.

When the user equipment is registered with the network for the first time, besides the network allocates an IP address (referred to as UE_IP) to the user equipment, the UE is in a connected state. In this case, the SNC sends a rule of processing the user equipment to the entry node (Entry) or the function unit (FN), that is, a bearer is established. After the user equipment does not perform data transceiving for a time period, the user equipment may enter an idle (IDLE) state. In this case, the SNC instructs the entry node (Entry) or the function unit (FN) to delete the rule of processing the user equipment, that is, delete the bearer.

Then, for example, the SNC may set the rule of processing the data stream by the entry node (Entry) to: when a destination of an IP packet is UE_IP, and the IP packet is the first packet, sending a Paging request message to the SNC, and temporarily storing the first packet; when the destination address of the IP packet is UE_IP and the IP packet is not the first packet, merely temporarily storing the IP packet. During actual operation, for example, a flow table may be designed, the entry node (Entry) may set a rule configuration message sent by the SNC as the following flow table:

| Flow number | Filter criterion (IP quintuple, and whether it is the first packet) | Operation |
|---|---|---|
| 1 | Destination address = UE_IP, and it is the first packet | Send a Paging request message to an SNC and temporarily store the first packet |
| 2 | Destination address = UE_IP, and it is not the first packet | Temporarily store the IP packet |

When the entry node (Entry) receives an IP packet that is to be sent to the user equipment, the entry node performs an operation according to the foregoing flow table. That is, when the entry node receives the first packet (the destination IP is UE_IP) sent to the user equipment, the entry node sends the Paging request message to the SNC and temporarily stores the first packet; and when receiving a subsequent packet (the destination IP is UE_IP) sent to the user equipment, the entry node temporarily stores the IP packet.

In this embodiment of the present invention, after receiving an identifier of user equipment included in a downlink data policy response message sent by an entry node, a network controller may predict a radio node connected to the user equipment and a second forwarding path between the entry node and the radio node; then, separately send the predicted second forwarding path and a corresponding forwarding policy to the entry node and a function node on the second forwarding path, so that the entry node saves a downlink data packet and sends the downlink data packet to the first function node on the second forwarding path, each function node on the second forwarding path processes the downlink data packet and forwards the processed downlink data packet to a next function node, and the last function node on the second forwarding path saves the processed downlink data packet. After the network controller determines a radio node currently connected to the user equipment and a first forwarding path, the network controller compares the first forwarding path with the second forwarding path. Because the network controller already predicts the second forwarding path before determining the first forwarding path, and each function node on the second forwarding path pre-processes the downlink data packet and the last function node on the second forwarding path saves the downlink data packet, after the first forwarding path is determined and when the second forwarding path is included in the first forwarding path, the last function node on the second forwarding path directly sends the saved pre-processed downlink data to the determined radio node and after the first forwarding path is determined, the downlink data packet does not need to be forwarded to the radio node by using each function node on the first forwarding path from the entry node before the downlink data packet is sent to the user equipment. Therefore, a delay of the downlink data packet can be reduced and the downlink data processing efficiency can be improved.

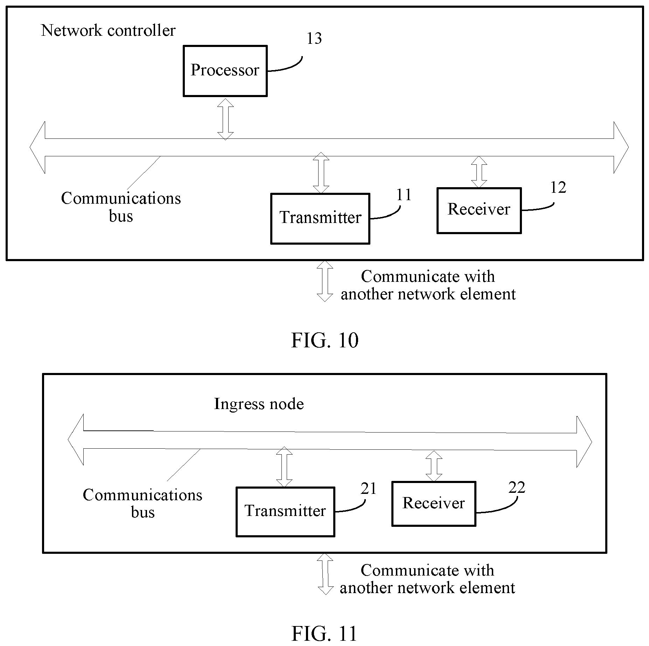

FIG. 10 is a schematic structural diagram of a downlink data processing apparatus being a network controller according to an embodiment of the present invention. As shown in FIG. 10, the network controller includes:
a transmitter 11, configured to send, according to an identifier of user equipment included in a downlink data policy response message sent by an entry node, a paging request message to the user equipment;
a receiver 12, configured to receive a service request message that is returned by the user equipment according to the paging request message; and
a processor 13, configured to: determine, according to the service request message received by the receiver 12, a radio node currently connected to the user equipment, and determine a first forwarding path between the entry node and the radio node, where the first forwarding path includes one or at least one function node, where
the transmitter 11 is further configured to send the first forwarding path to the entry node, so that the entry node sends a currently-received downlink data packet to the radio node by using the first forwarding path, and the radio node sends the downlink data packet to the user equipment.

Optionally, the transmitter 11 is further configured to send a downlink data policy message to the entry node, where the downlink data policy message is used to instruct the entry node to temporarily store the downlink data packet when the entry node receives the downlink data packet sent to the user equipment, and send the downlink data policy response message to the network controller, where the downlink data policy response message carries the identifier of the user equipment.

Optionally, the transmitter 11 is specifically configured to: when it is determined that the user equipment is in an idle state and no paging request is initiated to the user equipment, send the paging request message to the user equipment.

Optionally, the processor 13 is further configured to: obtain, according to the identifier of the user equipment, an identifier of a radio node that was connected to the user equipment and a historical downlink forwarding path by using which a downlink data packet is forwarded to the user equipment; predict, according to the identifier of the radio node that was connected to the user equipment and the historical downlink forwarding path that are obtained by the processor, a radio node currently connected to the user equipment and predict a second forwarding path between the entry node and the predicted radio node, where the second forwarding path includes one or at least one function node that the downlink data packet needs to pass through between the entry node and the predicted radio node; and use at least one function node on the second forwarding path predicted by the processor as a data cache node, where the data cache node includes at least the last function node on the second forwarding path.

Optionally, the transmitter 11 is further configured to send the second forwarding path and a forwarding policy of the entry node to the entry node, so that the entry node saves the downlink data packet and sends the downlink data packet to the first function node on the second forwarding path according to the corresponding forwarding policy.

Optionally, the transmitter 11 is further configured to send, by the network controller, the second forwarding path and a forwarding policy of each function node on the second forwarding path to the corresponding function node, so that when any function node except the last function node on the second forwarding path determines that the function node is a data cache node, the function node processes the downlink data, saves the processed downlink data, and sends the processed downlink data to a next function node, or when any function node except the last function node on the predicted forwarding path determines that the function node is not a data cache node, the function node processes the downlink data and sends the processed downlink data to a next function node, and the last function node on the second forwarding path processes the downlink data and saves the processed downlink data.

Optionally, the processor 13 is further configured to: compare the first forwarding path with the second forwarding path; if all function nodes on the second forwarding path are included in the first forwarding path and the first function node on the second forwarding path and the first function node on the first forwarding path are a same function node, determine that the second forwarding path is included in the first forwarding path; use the last function node on the second forwarding path as a data forwarding node and use a forwarding path after a function node corresponding to the data forwarding node on the first forwarding path as an intermediate forwarding path, where the intermediate forwarding path includes a function node from a next function node of the function node corresponding to the data forwarding node to the last function node on the first forwarding path.

Optionally, the transmitter 11 is further configured to send the intermediate forwarding path and a corresponding forwarding policy to the function node corresponding to the data forwarding node, so that the function node corresponding to the data forwarding node sends the saved processed downlink data packet to the radio node by using the intermediate forwarding path, and the radio node sends the processed downlink data packet to the user equipment.

Optionally, the processor 13 is further configured to compare the first forwarding path with the second forwarding path to determine that the second forwarding path is not included in the first forwarding path and there is no common path between the second forwarding path and the first forwarding path;

Optionally, the transmitter 11 is further configured to send a forwarding cancel policy to the last function node on the second forwarding path, so that the last function node on the second forwarding path deletes the processed downlink data packet.

Optionally, the transmitter 11 is further configured to send the first forwarding path and the forwarding policy of the entry node to the entry node, so that the entry node sends the saved downlink data packet to the radio node by using the first forwarding path according to the corresponding forwarding policy, and the radio node sends the processed downlink data packet to the user equipment.

Optionally, the processor 13 is further configured to: compare the first forwarding path with the second forwarding path to determine that the second forwarding path is not included in the first forwarding path and there is a common path between the second forwarding path and the first forwarding path, where the first function node on the common path is a same function node on the first forwarding path and the second forwarding path, and the last function node on the common path is a same function node on the first forwarding path and the second forwarding path and the function node is a data cache node; use the last function node on the common path as a data forwarding node; use a forwarding path after a function node corresponding to the data forwarding node on the first forwarding path as an intermediate forwarding path, where the intermediate forwarding path includes a function node from a next function node of the function node corresponding to the data forwarding node to the last function node on the first forwarding path.

Optionally, the transmitter 11 is further configured to send the intermediate forwarding path and a corresponding forwarding policy to the function node corresponding to the data forwarding node, so that the function node corresponding to the data forwarding node sends the saved processed downlink data packet to the radio node by using the intermediate forwarding path, and the radio node sends the processed downlink data packet to the user equipment.

Optionally, the processor 13 is further configured to use a forwarding path after a function node corresponding to the data forwarding node on the second forwarding path as an outdate data path, where the outdate data path includes a function node from a next function node of the function node corresponding to the data forwarding node on the second forwarding path to the last function node on the second forwarding path.

Optionally, the transmitter 11 is further configured to send a forwarding cancel policy to each function node on the outdate data path, so that each function node deletes the processed downlink data packet.

The transmitter, the receiver, and the processor are separately connected by using a communications bus, and the transmitter and the receiver are in communication connection with another network device (for example, an entry node or a function node) by using the communications interface.

In this embodiment of the present invention, after receiving an identifier of user equipment included in a downlink data policy response message sent by an entry node, a network controller may predict a radio node connected to the user equipment and a second forwarding path between the entry node and the radio node; then, separately send the predicted second forwarding path and a corresponding forwarding policy to the entry node and a function node on the second forwarding path, so that the entry node saves a downlink data packet and sends the downlink data packet to the first function node on the second forwarding path, each function node on the second forwarding path processes the downlink data packet and forwards the processed downlink data packet to a next function node, and the last function node on the second forwarding path saves the processed downlink data packet. After the network controller determines a radio node currently connected to the user equipment and a first forwarding path, the network controller compares the first forwarding path with the second forwarding path. Because the network controller already predicts the second forwarding path before determining the first forwarding path, and each function node on the second forwarding path pre-processes the downlink data packet and the last function node on the second forwarding path saves the downlink data packet, after the first forwarding path is determined and when the second forwarding path is included in the first forwarding path, the last function node on the second forwarding path directly sends the saved pre-processed downlink data to the determined radio node and after the first forwarding path is determined, the downlink data packet does not need to be forwarded to the radio node by using each function node on the first forwarding path from the entry node before the downlink data packet is sent to the user equipment. Therefore, a delay of the downlink data packet can be reduced and the downlink data processing efficiency can be improved.

FIG. 11 is a schematic structural diagram of an entry node according to another embodiment of the present invention. As shown in FIG. 11, the entry node includes:
a transmitter 21, configured to send a downlink data policy response message including an identifier of user equipment to a network controller, so that the network controller sends a paging request message to the user equipment, and when receiving a service request message sent by the user equipment to the network controller, determines a radio node currently connected to the user equipment and a first forwarding path between the entry node and the radio node, where the first forwarding path includes one or at least one function node; and
a receiver 22, configured to receive the first forwarding path sent by the network controller, where
the transmitter 21 is further configured to send a downlink data packet to the radio node by using the first forwarding path, so that the radio node sends the downlink data packet to the user equipment.

Optionally, the receiver 22 is further configured to receive a downlink data policy message sent by the network controller, where the downlink data policy message is used to instruct the entry node to temporarily store the downlink data packet when the entry node receives the downlink data packet sent by the network side to the user equipment, and send the downlink data policy response message to the network controller.

The transmitter and the receiver are connected by using a communications bus, and the transmitter and the receiver are in communication connection with another network device (for example, a network controller) by using the communications interface.

In this embodiment of the present invention, a network controller sends, according to an identifier of user equipment included in a downlink data policy response message sent by an entry node, a paging request message to the user equipment, so that the user equipment sends a service request message to the network controller; determines, according to the service request message, a radio node currently connected to the user equipment and a first forwarding path between the entry node and the radio node, and sends the first forwarding path to the entry node, so that the entry node sends a downlink data packet to the radio node by using the first forwarding path, and the radio node sends the downlink data packet to the user equipment. Therefore, the downlink data processing method provided in this embodiment of the present invention can support a Cloud Pipe network architecture based on an SDN and NFV.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A downlink data processing method, comprising:
sending (201), by a network controller, according to an identifier of user equipment comprised in a downlink data policy response message sent by an entry node, a paging request message to the user equipment, so that the user equipment sends a service request message to the network controller;
determining (202), according to the service request message, a radio node currently connected to the user equipment, and determining a forwarding path between the entry node and the radio node, wherein the determined forwarding path comprises one or at least one function node; and
sending (203) the determined forwarding path to the entry node, so that the entry node sends a currently-received downlink data packet to the radio node by using the determined forwarding path, and the radio node sends the downlink data packet to the user equipment;
wherein, before the determining a forwarding path between the entry node and the radio node, comprising:
obtaining (301), by the network controller, according to the identifier of the user equipment, an identifier of a radio node that was connected to the user equipment and a historical downlink forwarding path by using which a downlink data packet is forwarded to the user equipment;
predicting (302), according to the identifier of the radio node that was connected to the user equipment and the historical downlink forwarding path, a radio node currently connected to the user equipment, and predicting a forwarding path between the entry node and the predicted radio node, wherein the predicted forwarding path comprises one or at least one function node that the downlink data packet needs to pass through between the entry node and the predicted radio node; and
setting (303) at least one function node on the predicted forwarding path as a data cache node, wherein the data cache node comprises at least the last function node on the predicted forwarding path;
wherein, after the predicting a forwarding path between the entry node and the predicted radio node, the method further comprises:
sending (304), by the network controller, the predicted forwarding path and a forwarding policy of the entry node to the entry node, so that the entry node saves the downlink data packet and sends the downlink data packet to the first function node on a second predicted forwarding path according to the corresponding forwarding policy.

2. The method according to claim 1, before the sending, by a network controller, according to an identifier of user equipment comprised in a downlink data policy response message sent by an entry node, a paging request message to the user equipment, comprising:
sending, by the network controller, a downlink data policy message to the entry node, wherein the downlink data policy message is used to instruct the entry node to temporarily store the downlink data packet when the entry node receives the downlink data packet sent to the user equipment, and send the downlink data policy response message to the network controller, wherein the downlink data policy response message carries the identifier of the user equipment.

3. The method according to claim 1, the sending a paging request message to the user equipment comprises:
when the network controller determines that the user equipment is in an idle state and no paging request is initiated to the user equipment, sending the paging request message to the user equipment.

4. The method according to claim 1 to 3, after the setting at least one function node on the predicted forwarding path as a data cache node, comprising:
sending, by the network controller, the predicted forwarding path and a forwarding policy of each function node on the predicted forwarding path to the corresponding function node, so that when any function node except the last function node on the predicted forwarding path determines that the function node is a data cache node, the function node processes the downlink data, saves the processed downlink data, and sends the processed downlink data to a next function node, or when any function node except the last function node on the predicted forwarding path determines that the function node is not a data cache node, the function node processes the downlink data and sends the processed downlink data to a next function node, and the last function node on the predicted forwarding path processes the downlink data and saves the processed downlink data.

5. A downlink data processing apparatus, located on a side of a network controller, comprising:
a sending module (71), configured to send, according to an identifier of user equipment comprised in a downlink data policy response message sent by an entry node, a paging request message to the user equipment;
a receiving module (72), configured to receive a service request message that is returned by the user equipment according to the paging request message; and
a determining module (73), configured to: determine, according to the service request message received by the receiving module, a radio node currently connected to the user equipment, and determine a forwarding path between the entry node and the radio node, wherein the determined forwarding path comprises one or at least one function node, wherein
the sending module is further configured to send the determined forwarding path to the entry node, so that the entry node sends a currently-received downlink data packet to the radio node by using the determined forwarding path, and the radio node sends the downlink data packet to the user equipment;
wherein, the apparatus further comprises:
an obtaining module (74), configured to obtain, according to the identifier of the user equipment, an identifier of a radio node that was connected to the user equipment and a historical downlink forwarding path by using which a downlink data packet is forwarded to the user equipment;
a prediction module (75), configured to: predict, according to the identifier of the radio node that was connected to the user equipment and the historical downlink forwarding path that are obtained by the obtaining module, a radio node currently connected to the user equipment, and predict a forwarding path between the entry node and the predicted radio node, wherein the predicted forwarding path comprises one or at least one function node that the downlink data packet needs to pass through between the entry node and the predicted radio node; and
a setting module (76), configured to set at least one function node on the predicted forwarding path predicted by the prediction module as a data cache node, wherein the data cache node comprises at least the last function node on the predicted forwarding path;
wherein the sending module is further configured to send the predicted forwarding path and a forwarding policy of the entry node to the entry node, so that the entry node saves the downlink data packet and sends the downlink data packet to the first function node on a second predicted forwarding path according to the corresponding forwarding policy.

6. The apparatus according to claim 5, comprising:
the sending module (71) is further configured to send a downlink data policy message to the entry node, wherein the downlink data policy message is used to instruct the entry node to temporarily store the downlink data packet when the entry node receives the downlink data packet sent to the user equipment, and send the downlink data policy response message to the network controller, wherein the downlink data policy response message carries the identifier of the user equipment.

7. The apparatus according to claim 5, wherein the sending module (71) is specifically configured to: when it is determined that the user equipment is in an idle state and no paging request is initiated to the user equipment, send the paging request message to the user equipment.

8. The apparatus according to claim 5 to 7, wherein the sending module (71) is further configured to send the predicted forwarding path and a forwarding policy of each function node on the predicted forwarding path to the corresponding function node, so that when any function node except the last function node on the predicted forwarding path determines that the function node is a data cache node, the function node processes the downlink data, saves the processed downlink data, and sends the processed downlink data to a next function node, or when any function node except the last function node on the predicted forwarding path determines that the function node is not a data cache node, the function node processes the downlink data and sends the processed downlink data to a next function node, and the last function node on the predicted forwarding path processes the downlink data and saves the processed downlink data.

9. The apparatus according to claim 8, wherein the setting module (76) is further configured to use a forwarding path after a function node corresponding to the data forwarding node on the predicted forwarding path as an outdate data path, wherein the outdate data path comprises a function node from a next function node of the function node corresponding to the data forwarding node on the predicted forwarding path to the last function node on the predicted forwarding path; and
the sending module (71) is further configured to send a forwarding cancel policy to each function node on the outdate data path, so that each function node deletes the processed downlink data packet.

10. A downlink data processing system, comprising an apparatus located on the side of a network controller (91) according to any one of claims 5 to 9, an entry node (92), at least one function node (93), at least one radio node (94), and user equipment (95).

## Patentansprüche

1. Abwärtsstreckendaten-Vverarbeitungsverfahren, umfassend:
Senden (201), durch eine Netzwerksteuerung, gemäß einer Kennung eines Benutzergeräts, die in einer Abwärtsstreckendaten-Richtlinienantwortnachricht enthalten ist, die durch einen Eintrittsknoten gesendet wird, einer Paging-Anforderungsnachricht zum Benutzergerät, sodass das Benutzergerät eine Dienstanforderungsnachricht zur Netzwerksteuerung sendet;
Bestimmen (202), gemäß der Dienstanforderungsnachricht, eines Funkknotens, der gegenwärtig mit dem Benutzergerät verbunden ist, und Bestimmen eines Weiterleitungspfads zwischen dem Eintrittsknoten und dem Funkknoten, wobei der bestimmte Weiterleitungspfad einen oder mindestens einen Funktionsknoten umfasst; und
Senden (203) des bestimmten Weiterleitungspfads zum Eintrittsknoten, sodass der Eintrittsknoten ein gegenwärtig empfangenes Abwärtsstreckendatenpaket unter Verwendung des bestimmten Weiterleitungspfads zum Funkknoten sendet und der Funkknoten das Abwärtsstreckendatenpaket zum Benutzergerät sendet;
wobei, vor dem Bestimmen eines Weiterleitungspfads zwischen dem Eintrittsknoten und dem Funkknoten, umfassend:
Erhalten (301), durch die Netzwerksteuerung, gemäß der Kennung des Benutzergeräts, einer Kennung eines Funkknotens, der mit dem Benutzergerät verbunden war, und eines historischen Abwärtsstreckenweiterleitungspfads unter Verwendung dessen ein Abwärtsstreckendatenpaket zum Benutzergerät weitergeleitet wird;
Vorhersagen (302), gemäß der Kennung des Funkknotens, der mit dem Benutzergerät verbunden war, und dem historischen Abwärtsstreckenweiterleitungspfad, eines Funkknotens, der gegenwärtig mit dem Benutzergerät verbunden ist, und Vorhersagen eines Weiterleitungspfads zwischen dem Eintrittsknoten und dem vorhergesagten Funkknoten, wobei der vorhergesagte Weiterleitungspfad einen oder mindestens einen Funktionsknoten umfasst, den das Abwärtsstreckendatenpaket zwischen dem Eintrittsknoten und dem vorhergesagten Funkknoten durchlaufen muss; und
Festlegen (303) von mindestens einem Funktionsknoten auf dem vorhergesagten Weiterleitungspfad als einen Daten-Cache-Knoten, wobei der Daten-Cache-Knoten mindestens den letzten Funktionsknoten auf dem vorhergesagten Weiterleitungspfad umfasst;
wobei das Verfahren, nach dem Vorhersagen eines Weiterleitungspfads zwischen dem Eintrittsknoten und dem vorhergesagten Funkknoten, ferner Folgendes umfasst:
Senden (304), durch die Netzwerksteuerung, des vorhergesagten Weiterleitungspfads und einer Weiterleitungsrichtlinie des Eintrittsknotens zum Eintrittsknoten, sodass der Eintrittsknoten das Abwärtsstreckendatenpaket abspeichert und das Abwärtsstreckendatenpaket auf einem zweiten vorhergesagten Weiterleitungspfad gemäß der entsprechenden Weiterleitungsrichtlinie zum ersten Funktionsknoten sendet.

2. Verfahren nach Anspruch 1, das vor dem Senden, durch eine Netzwerksteuerung, gemäß einer Kennung eines Benutzergeräts, die in einer Abwärtsstreckendaten-Richtlinienantwortnachricht enthalten ist, die durch einen Eintrittsknoten gesendet wird, einer Paging-Anforderungsnachricht zum Benutzergerät Folgendes umfasst:
Senden, durch die Netzwerksteuerung, einer Abwärtsstreckendaten-Richtliniennachricht zum Eintrittsknoten, wobei die Abwärtsstreckendaten-Richtliniennachricht dazu verwendet wird, den Eintrittsknoten anzuweisen, das Abwärtsstreckendatenpaket temporär zu speichern, wenn der Eintrittsknoten das Abwärtsstreckendatenpaket empfängt, das zum Benutzergerät gesendet wird, und die Abwärtsstreckendaten-Richtlinienantwortnachricht zur Netzwerksteuerung zu senden, wobei die Abwärtsstreckendaten-Richtlinienantwortnachricht die Kennung des Benutzergeräts führt.

3. Verfahren nach Anspruch 1, wobei das Senden einer Paging-Anforderungsnachricht zum Benutzergerät Folgendes umfasst:
wenn die Netzwerksteuerung bestimmt, dass sich das Benutzergerät in einem Ruhezustand befindet und keine Paging-Anforderung zum Benutzergerät initiiert wird, Senden der Paging-Anforderungsnachricht zum Benutzergerät.

4. Verfahren nach Anspruch 1 bis 3, das nach dem Festlegen von mindestens einem Funktionsknoten auf dem vorhergesagten Weiterleitungspfad als einen Daten-Cache-Knoten Folgendes umfasst:
Senden, durch die Netzwerksteuerung, des vorhergesagten Weiterleitungspfads und einer Weiterleitungsrichtlinie jedes Funktionsknotens auf dem vorhergesagten Weiterleitungspfad zum entsprechenden Funktionsknoten, sodass, wenn ein beliebiger Funktionsknoten außer dem letzten Funktionsknoten auf dem vorhergesagten Weiterleitungspfad bestimmt, dass der Funktionsknoten ein Daten-Cache-Knoten ist, der Funktionsknoten die Abwärtsstreckendaten verarbeitet, die verarbeiteten Abwärtsstreckendaten abspeichert und die verarbeiteten Abwärtsstreckendaten zu einem nächsten Funktionsknoten sendet, oder, wenn ein beliebiger Funktionsknoten außer dem letzten Funktionsknoten auf dem vorhergesagten Weiterleitungspfad bestimmt, dass der Funktionsknoten kein Daten-Cache-Knoten ist, der Funktionsknoten die Abwärtsstreckendaten verarbeitet und die verarbeiteten Abwärtsstreckendaten zu einem nächsten Funktionsknoten sendet und der letzte Funktionsknoten auf dem vorhergesagten Weiterleitungspfad die Abwärtsstreckendaten verarbeitet und die verarbeiteten Abwärtsstreckendaten abspeichert.

5. Abwärtsstreckendaten-Verarbeitungsvorrichtung, die sich auf einer Seite einer Netzwerksteuerung befindet, umfassend:
ein Sendemodul (71), das ausgelegt ist zum Senden, gemäß einer Kennung eines Benutzergeräts, die in einer Abwärtsstreckendaten-Richtlinienantwortnachricht enthalten ist, die durch einen Eintrittsknoten gesendet wird, einer Paging-Anforderungsnachricht zum Benutzergerät;
ein Empfangsmodul (72), das ausgelegt ist zum Empfangen einer Dienstanforderungsnachricht, die durch das Benutzergerät gemäß der Paging-Anforderungsnachricht zurück gesendet wird; und
ein Bestimmungsmodul (73), das ausgelegt ist zum Bestimmen, gemäß der Dienstanforderungsnachricht, die durch das Empfangsmodul empfangen wird, eines Funkknotens, der gegenwärtig mit dem Benutzergerät verbunden ist, und Bestimmen eines Weiterleitungspfads zwischen dem Eintrittsknoten und dem Funkknoten, wobei der bestimmte Weiterleitungspfad einen oder mindestens einen Funktionsknoten umfasst, wobei
das Sendemodul ferner ausgelegt ist zum Senden des bestimmten Weiterleitungspfads zum Eintrittsknoten, sodass der Eintrittsknoten ein gegenwärtig empfangenes Abwärtsstreckendatenpaket unter Verwendung des bestimmten Weiterleitungspfads zum Funkknoten sendet und der Funkknoten das Abwärtsstreckendatenpaket zum Benutzergerät sendet;
wobei die Vorrichtung ferner Folgendes umfasst:
ein Erhaltemodul (74), das ausgelegt ist zum Erhalten, gemäß der Kennung des Benutzergeräts, einer Kennung eines Funkknotens, der mit dem Benutzergerät verbunden war, und eines historischen Abwärtsstreckenweiterleitungspfads unter Verwendung dessen ein Abwärtsstreckendatenpaket zum Benutzergerät weitergeleitet wird;
ein Vorhersagemodul (75), das ausgelegt ist zum Vorhersagen, gemäß der Kennung des Funkknotens, der mit dem Benutzergerät verbunden war, und dem historischen Abwärtsstreckenweiterleitungspfad, die durch das Erhaltemodul erhalten werden, eines Funkknotens, der gegenwärtig mit dem Benutzergerät verbunden ist, und Vorhersagen eines Weiterleitungspfads zwischen dem Eintrittsknoten und dem vorhergesagten Funkknoten, wobei der vorhergesagte Weiterleitungspfad einen oder mindestens einen Funktionsknoten umfasst, den das Abwärtsstreckendatenpaket zwischen dem Eintrittsknoten und dem vorhergesagten Funkknoten durchlaufen muss; und
ein Festlegungsmodul (76), das ausgelegt ist zum Festlegen von mindestens einem Funktionsknoten auf dem vorhergesagten Weiterleitungspfad, der durch das Vorhersagemodul vorhergesagt wird, als einen Daten-Cache-Knoten, wobei der Daten-Cache-Knoten mindestens den letzten Funktionsknoten auf dem vorhergesagten Weiterleitungspfad umfasst;
wobei das Sendemodul ferner ausgelegt ist zum Senden des vorhergesagten Weiterleitungspfads und einer Weiterleitungsrichtlinie des Eintrittsknotens zum Eintrittsknoten, sodass der Eintrittsknoten das Abwärtsstreckendatenpaket abspeichert und das Abwärtsstreckendatenpaket auf einem zweiten vorhergesagten Weiterleitungspfad gemäß der entsprechenden Weiterleitungsrichtlinie zum ersten Funktionsknoten sendet.

6. Vorrichtung nach Anspruch 5, umfassend:
das Sendemodul (71) ist ferner ausgelegt zum Senden einer Abwärtsstreckendaten-Richtliniennachricht zum Eintrittsknoten, wobei die Abwärtsstreckendaten-Richtliniennachricht dazu verwendet wird, den Eintrittsknoten anzuweisen, das Abwärtsstreckendatenpaket temporär zu speichern, wenn der Eintrittsknoten das Abwärtsstreckendatenpaket empfängt, das zum Benutzergerät gesendet wird, und die Abwärtsstreckendaten-Richtlinienantwortnachricht zur Netzwerksteuerung zu senden, wobei die Abwärtsstreckendaten-Richtlinienantwortnachricht die Kennung des Benutzergeräts führt.

7. Vorrichtung nach Anspruch 5, wobei das Sendemodul (71) spezifisch ausgelegt ist zum Senden der Paging-Anforderungsnachricht zum Benutzergerät, wenn bestimmt wird, dass sich das Benutzergerät in einem Ruhezustand befindet und keine Paging-Anforderung zum Benutzergerät initiiert wird.

8. Vorrichtung nach den Ansprüchen 5 bis 7, wobei das Sendemodul (71) ferner ausgelegt ist zum Senden des vorhergesagten Weiterleitungspfads und einer Weiterleitungsrichtlinie jedes Funktionsknotens auf dem vorhergesagten Weiterleitungspfad zum entsprechenden Funktionsknoten, sodass, wenn ein beliebiger Funktionsknoten außer dem letzten Funktionsknoten auf dem vorhergesagten Weiterleitungspfad bestimmt, dass der Funktionsknoten ein Daten-Cache-Knoten ist, der Funktionsknoten die Abwärtsstreckendaten verarbeitet, die verarbeiteten Abwärtsstreckendaten abspeichert und die verarbeiteten Abwärtsstreckendaten zu einem nächsten Funktionsknoten sendet, oder, wenn ein beliebiger Funktionsknoten außer dem letzten Funktionsknoten auf dem vorhergesagten Weiterleitungspfad bestimmt, dass der Funktionsknoten kein Daten-Cache-Knoten ist, der Funktionsknoten die Abwärtsstreckendaten verarbeitet und die verarbeiteten Abwärtsstreckendaten zu einem nächsten Funktionsknoten sendet und der letzte Funktionsknoten auf dem vorhergesagten Weiterleitungspfad die Abwärtsstreckendaten verarbeitet und die verarbeiteten Abwärtsstreckendaten abspeichert.

9. Vorrichtung nach Anspruch 8, wobei das Festlegungsmodul (76) ferner ausgelegt ist zum Verwenden eines Weiterleitungspfads nach einem Funktionsknoten, der dem Datenweiterleitungsknoten auf dem vorhergesagten Weiterleitungspfad entspricht, als einen "Outdate"-Datenpfad, wobei der "Outdate"-Datenpfad einen Funktionsknoten von einem nächsten Funktionsknoten des Funktionsknotens, der dem Datenweiterleitungsknoten entspricht, auf dem vorhergesagten Weiterleitungspfad zum letzten Funktionsknoten auf dem vorhergesagten Weiterleitungspfad umfasst; und
das Sendemodul (71) ferner ausgelegt ist zum Senden einer Weiterleitungsabbruchsrichtlinie zu jedem Funktionsknoten auf dem "Outdate"-Datenpfad, sodass jeder Funktionsknoten das verarbeitete Abwärtsstreckendatenpaket löscht.

10. Abwärtsstreckendaten-Verarbeitungssystem, umfassend eine Vorrichtung, die sich auf der Seite einer Netzwerksteuerung (91) befindet, gemäß einem der Ansprüche 5 bis 9, einen Eintrittsknoten (92), mindestens einen Funktionsknoten (93), mindestens einen Funkknoten (94) und ein Benutzergerät (95).

## Revendications

1. Procédé de traitement de données de liaison descendante, consistant à :
envoyer (201), grâce à un contrôleur de réseau, en fonction d'un identifiant d'un équipement utilisateur compris dans un message de réponse de règles de données de liaison descendante envoyé par un noeud d'entrée, un message de requête de radiomessagerie à l'équipement utilisateur, de sorte que l'équipement utilisateur envoie un message de requête de service au contrôleur de réseau ;
déterminer (202), en fonction du message de requête de service, un noeud radio connecté actuellement à l'équipement utilisateur, et déterminer un trajet d'acheminement entre le noeud d'entrée et le noeud radio, le trajet d'acheminement déterminé comprenant un ou au moins un noeud de fonction ; et
envoyer (203) le trajet d'acheminement déterminé au noeud d'entrée, de sorte que le noeud d'entrée envoie un paquet de données de liaison descendante en cours de réception au noeud radio à l'aide du trajet d'acheminement déterminé, et le noeud radio envoie le paquet de données de liaison descendante à l'équipement utilisateur ;
dans lequel, avant la détermination d'un trajet d'acheminement entre le noeud d'entrée et le noeud radio consistant à :
obtenir (301), grâce au contrôleur de réseau, en fonction de l'identifiant de l'équipement utilisateur, un identifiant d'un noeud radio qui a été connecté à l'équipement utilisateur et à un trajet d'acheminement de liaison descendante historique grâce à l'utilisation duquel un paquet de données de liaison descendante est transmis à l'équipement utilisateur ;
prédire (302), en fonction de l'identifiant du noeud radio qui a été connecté à l'équipement utilisateur et au trajet d'acheminement de liaison descendante historique, un noeud radio actuellement connecté à l'équipement utilisateur, et prédire un trajet d'acheminement entre le noeud d'entrée et le noeud radio prédit, le trajet d'acheminement prédit comprenant un ou au moins un noeud de fonction que le paquet de données de liaison descendante doit traverser entre le noeud d'entrée et le noeud radio prédit ; et
régler (303) au moins un noeud de fonction sur le trajet d'acheminement prédit en tant que noeud de cache de données, le noeud de cache de données comprenant au moins le dernier noeud de fonction sur le trajet d'acheminement prédit ;
dans lequel, après la prédiction d'un trajet d'acheminement entre le noeud d'entrée et le noeud radio prédit, le procédé consiste en outre à :
envoyer (304), grâce au contrôleur de réseau, le trajet d'acheminement prédit et une règle d'acheminement du noeud d'entrée au noeud d'entrée, de sorte que le noeud d'entrée sauvegarde le paquet de données de liaison descendante et envoie le paquet de données de liaison descendante au premier noeud de fonction sur un second trajet d'acheminement prédit en fonction de la règle d'acheminement correspondante.

2. Procédé selon la revendication 1, avant l'envoi, par un contrôleur de réseau, en fonction d'un identifiant de l'équipement utilisateur compris dans un message de réponse de règles de données de liaison descendante envoyé par un noeud d'entrée, d'un message de requête de radiomessagerie à l'équipement utilisateur, consistant à :
envoyer, grâce au contrôleur de réseau, un message de règles de données de liaison descendante au noeud d'entrée, le message de règles de données de liaison descendante étant utilisé pour donner instruction au noeud d'entrée de stocker temporairement le paquet de données de liaison descendante lorsque le noeud d'entrée reçoit le paquet de données de liaison descendante envoyé à l'équipement utilisateur, et envoyer le message de réponse de règles de données de liaison descendante au contrôleur de réseau, le message de réponse de règles de données de liaison descendante acheminant l'identifiant de l'équipement utilisateur.

3. Procédé selon la revendication 1, l'envoi d'un message de requête de radiomessagerie à l'équipement utilisateur consistant à :
lorsque le contrôleur de réseau détermine que l'équipement utilisateur est dans un état inactif ou qu'aucune requête de radiomessagerie n'est initiée sur l'équipement utilisateur, envoyer le message de requête de radiomessagerie à l'équipement utilisateur.

4. Procédé selon la revendication 1 à 3, après le réglage d'au moins un noeud de fonction sur le trajet d'acheminement prédit en tant que noeud de cache de données, consistant à :
envoyer, par le contrôleur de réseau, le trajet d'acheminement prédit et une règle d'acheminement de chaque noeud de fonction sur le trajet d'acheminement prédit au noeud de fonction correspondant, de sorte que lorsque n'importe quel noeud de fonction à l'exception du dernier noeud de fonction sur le trajet d'acheminement prédit détermine que le noeud de fonction est un noeud de cache de données, le noeud de fonction traite les données de liaison descendante, sauvegarde les données de liaison montante traitées, et envoie les données de liaison descendante traitées à un noeud de fonction suivant, ou lorsqu'aucun noeud de fonction à l'exception du dernier noeud de fonction sur le trajet d'acheminement prédit détermine que le noeud de fonction n'est pas un noeud de cache de données, le noeud de fonction traite les données de liaison descendante et envoie les données de liaison descendante traitées à un noeud de fonction suivant, et le dernier noeud de fonction sur le trajet d'acheminement prédit traite les données de liaison descendante et sauvegarde les données de liaison descendante traitées.

5. Appareil de traitement de données de liaison descendante, situé sur un côté d'un contrôleur de réseau, comprenant :
un module d'envoi (71), conçu pour envoyer, en fonction d'un identifiant d'un équipement utilisateur compris dans un message de réponse de règles de données de liaison descendante envoyé par un noeud d'entrée, un message de requête de radiomessagerie à l'équipement utilisateur ;
un module de réception (72), conçu pour recevoir un message de requête de service qui est renvoyé par l'équipement utilisateur en fonction du message de requête de radiomessagerie ; et
un module de détermination (73), conçu pour : déterminer, en fonction du message de requête de service reçu par le module de réception, un noeud radio connecté actuellement à l'équipement utilisateur, et déterminer un trajet d'acheminement entre le noeud d'entrée et le noeud radio, le trajet d'acheminement déterminé comprenant un ou au moins un noeud de fonction, dans lequel
le module d'envoi est conçu en outre pour envoyer le trajet d'acheminement déterminé au noeud d'entrée, de sorte que le noeud d'entrée envoie un paquet de données de liaison descendante en cours de réception au noeud radio à l'aide du trajet d'acheminement déterminé, et le noeud radio envoie le paquet de données de liaison descendante à l'équipement utilisateur ;
dans lequel, l'appareil comprend en outre :
un module d'obtention (74), conçu pour obtenir, en fonction de l'identifiant de l'équipement utilisateur, un identifiant d'un noeud radio qui a été connecté à l'équipement utilisateur et à un trajet d'acheminement de liaison descendante historique grâce à l'utilisation duquel un paquet de données de liaison descendante est transmis à l'équipement utilisateur ;
un module de prédiction (75), conçu pour : prédire, en fonction de l'identifiant du noeud radio qui a été connecté à l'équipement utilisateur et au trajet d'acheminement de liaison descendante historique qui sont obtenus par le module d'obtention, un noeud radio connecté actuellement à l'équipement utilisateur, et prédire un trajet d'acheminement entre le noeud d'entrée et le noeud radio prédit, le trajet d'acheminement prédit comprenant un ou au moins un noeud de fonction que le paquet de données de liaison descendante doit traverser entre le noeud d'entrée et le noeud radio prédit ; et
un module de réglage (76), conçu pour régler au moins un noeud de fonction sur le trajet d'acheminement prédit par le module de prédiction en tant que noeud de cache de données, le noeud de cache de données comprenant au moins le dernier noeud de fonction sur le trajet d'acheminement prédit ;
dans lequel le module d'envoi est conçu en outre pour envoyer le trajet d'acheminement prédit et une règle d'acheminement du noeud d'entrée au noeud d'entrée, de sorte que le noeud d'entrée sauvegarde le paquet de données de liaison descendante et envoie le paquet de données de liaison descendante au premier noeud de fonction sur un second trajet d'acheminement prédit en fonction de la règle d'acheminement correspondante.

6. Appareil selon la revendication 5, comprenant :
le module d'envoi (71) est conçu en outre pour envoyer un message de règles de données de liaison descendante au noeud d'entrée, le message de règles de données de liaison descendante étant utilisé pour donner instruction au noeud d'entrée de stocker temporairement le paquet de données de liaison descendante lorsque le noeud d'entrée reçoit le paquet de données de liaison descendante envoyé à l'équipement utilisateur, et envoyer le message de réponse de règles de données de liaison descendante au contrôleur de réseau, le message de réponse de règles de données de liaison descendante acheminant l'identifiant de l'équipement utilisateur.

7. Appareil selon la revendication 5, dans lequel le module d'envoi (71) est conçu spécifiquement pour : lorsqu'on détermine que l'équipement utilisateur est dans un mode inactif et qu'aucune requête de radiomessagerie n'est initiée sur l'équipement utilisateur, envoyer le message de requête de radiomessagerie à l'équipement utilisateur.

8. Appareil selon les revendications 5 à 7, dans lequel le module d'envoi (71) est conçu en outre pour envoyer le trajet d'acheminement prédit et une règle d'acheminement de chaque noeud de fonction sur le trajet d'acheminement prédit au noeud de fonction correspondant, de sorte que lorsque n'importe quel noeud de fonction à l'exception du dernier noeud de fonction sur le trajet d'acheminement prédit détermine que le noeud de fonction est un noeud de cache de données, le noeud de fonction traite les données de liaison descendante, sauvegarde les données de liaison montante traitées, et envoie les données de liaison descendante traitées à un noeud de fonction suivant, ou lorsque n'importe quel noeud de fonction à l'exception du dernier noeud de fonction sur le trajet d'acheminement prédit détermine que le noeud de fonction n'est pas un noeud de cache de données, le noeud de fonction traite les données de liaison descendante et envoie les données de liaison descendante traitées à un noeud de fonction suivant, et le dernier noeud de fonction sur le trajet d'acheminement prédit traite les données de liaison descendante et sauvegarde les données de liaison descendante traitées.

9. Appareil selon la revendication 8, dans lequel le module de réglage (76) est conçu en outre pour utiliser un trajet d'acheminement après un noeud de fonction correspondant au noeud d'acheminement de données sur le trajet d'acheminement prédit en tant que trajet de données obsolète, le trajet de données obsolète comprenant un noeud de fonction provenant d'un noeud de fonction suivant du noeud de fonction correspondant au noeud d'acheminement de données sur le trajet d'acheminement prédit au dernier noeud de fonction sur le trajet d'acheminement prédit ; et
le module d'envoi (71) est conçu en outre pour envoyer une règle d'annulation d'acheminement à chaque noeud de fonction sur le trajet de données obsolète, de sorte que chaque noeud de fonction efface le paquet de données de liaison descendante traité.

10. Système de traitement de données de liaison descendante, comprenant un appareil situé sur le côté d'un contrôleur de réseau (91) selon l'une quelconque des revendications 5 à 9, un noeud d'entrée (92), au moins un noeud de fonction (93), au moins un noeud radio (94), et un équipement utilisateur (95).
